# EUROPEAN PATENT SPECIFICATION

(11) **EP 2 809 947 B1**
(45) Date of publication and mention of the grant of the patent: **04.01.2017**
(21) Application number: 12813436.8
(22) Date of filing: 14.11.2012
(51) Int. Cl.: F03D 7/02, H02K 7/12, H02K 7/18

(54) **A WIND TURBINE WITH A PITCH REGULATION AND FURLING OUT OF WIND**
WINDKRAFTANLAGE MIT PITCHREGLUNG UND AUFROLLUNG AUS DEM WIND
EOLIENNE AVEC REGLAGE DU CALAGE DES PALES ET POSITIONMENT HORS DU VENT

(30) Priority: 18.11.2011 IT PN20110075
(43) Date of publication of application: 10.12.2014
(73) Proprietor: Intermek S.r.l., 33084 Cordenons (PN) (IT)
(72) Inventor: BARBARIN, Marco, I-33170 Pordenone (IT); FAUSTO, Guglielmo, I-73100 Lecce (IT)
(74) Representative: Dalla Rosa, Adriano
(86) International application number: PCT/IB2012/002389
(87) International publication number: WO 2013/072756

(56) References cited:
- CN-U- 201 991 698
- DE-C- 926 420
- GB-A- 383 264
- GB-A- 2 436 599
- JP-A- 57 210 172
- US-A- 2 158 606
- US-A- 4 444 543
- US-B1- 7 939 961

## Description

The invention concerns a wind turbine with a pitch regulation and furling out of wind, made of relatively limited sizes, particularly for installations on inhabited environments, and arranged for operating also under conditions of strong wind.

From GB 2 436 599 A it is known a blade furling system of a small (less than 20 kW output) wind turbine, which adjusts the "angle of attack" of all the blades simultaneously, preferably via a linkwork that comprises a crank pin which is attached to the blade, and is held in contact with a slider which is acted on by spring (s). The force of the wind on the blades automatically changes the angle of the blades and the amount of change is regulated by the spring force and pitch weights. Bi-stable and tri-stable positions of the blades are attained, wherein the tri-stable position is achieved by using two springs. Such wind turbine is connected to an electric generator for generating electric power by the rotation of the blades produced by the wind.

From US 4,444,543 A it is known a windmill for pumping well water using wind energy.

Such windmill has a gearbox, tail and wheel, in which a mast is secured to the windmill and is rotatable as a unit within a mast housing secured to a tower. A pull-out assembly exerts an axial downward force on a pull-out tube concentrically positioned within the mast.

A mounting hub on the drive shaft supports the wheel at taper bearing surfaces. The individual sails are adjustably secured to one or more concentric, segmented rings attached to the mounting hub by radial spokes or braces.

From US 2,158,606 A it is known a windmill construction comprising a wind operated vane, a rod structure operated by the vane, a vertical barrel, a packing gland in the barrel, a gear case mounted at the upper end of the barrel, said vane having a shaft extending into the case, said packing gland being adapted to prevent lubricant from escaping from the case and barrel, a sun gear carried by the inner end of the vane shaft, a ring gear fastened to the inside of the gear case, planetary gears meshing with the ring gear and the sun gear, an annulus, a stub shaft extending from one of the planetary gears and into the annulus, said rod being connected to the annulus.

From GB 383, 264 A it is known an improved windmill for driving apparatus of any type, particularly pumps. Windmill in which the inclination of the vane wheel relatively to the direction of the wind is obtained by moving the tail to the direction of the wind in an automatic manner, both when the wind increases and decreases. The movement of the tail is ensured by a centrifugal governor which on opening out, moves the tail toward the plane of the vane wheel and, on closing, moves the tail away from the plane of the vane wheel. The component parts of the governor and their operation mode are described in detail.

From DE 926 429 C it is known a regulation device for wind motors depending on the rotation speed, which wind motors are also adapted to rotate an electric generator for generating electric energy. The wind motors are provided with wheel actuated in rotation by the wind, and the plane of the wheel vanes is adjusted with respect to the wind direction depending on the rotation speed of the wind wheel. The control member providing for the adjustment is regulated with respect to the wind direction by means of a centrifugal force regulation device. The control member with respect to the impact direction of the wind is so shaped as that the moments of the wind force acting on to the adjustment axis are balanced.

The object of the present invention is to realize a wind turbine with a pitch regulation and furling out of wind which is made with characteristics which are different with respect to the characteristics of the devices disclosed by the above mentioned known references.

The wind turbine according to the invention is made with the substantially described constructive characteristics, with particular reference to the attached patent claims.

The invention will be better understood from the following description, given by way of a not-limiting example only, and with reference to the accompanying drawings in which :
- Fig. 1 shows a perspective side view of a wind turbine according to the invention, without the vanes mounted therein and in a first embodiment thereof;
- Fig. 2 shows a perspective side view of the rotor of the wind turbine of Fig. 1, in which the vanes are mounted and the electric generator is incorporated ;
- Fig. 3 shows a side view of the rotor of Fig. 2 ;
- Fig. 4 shows a partially cutaway front view of the rotor with the vanes mounted therein ;
- Fig. 5 shows, with the same view of Fig. 4, an enlarged constructive item of the rotor of Fig. 4 ;
- Fig. 6 shows a cutaway side view of the rotor of Fig. 4, with a portion of the vanes, which is displaced in an operative position thereof;
- Fig. 7 shows, with the same view of Fig. 6, an enlarged constructive item of the rotor of Fig. 6 ;
- Fig. 8 shows a perspective enlarged and partially cutaway side view of the rotor and some of the vanes of Fig. 4, which rotor is displaced in the same operative position of Fig. 4 ;
- Fig. 9 shows, with the same view of Fig. 8, the rotor displaced in an operative position which is different and rotated with respect to the preceding one ;
- Fig. 10 show a front view of a vane of the wind turbine according to the invention ;
- Fig. 11 shows a side view of a portion of the vane of Fig. 10 and the coupling for mounting the vane in the rotor, in a first mounting step of the vane ;
- Fig. 12, 13 and 14 show, with the same views of Fig. 11, subsequent mounting steps of the vane in the rotor ;
- Figs. 15, 16 and 17 show, respectively with a side view, a plan view and a back view, the wind turbine of Fig. 1 displaced in a first operative position thereof;
- Figs. 18, 19 and 20 show, with the same respective views of Figs. 15, 16 and 17, the wind turbine of Fig. 1 displaced in a second operative position thereof, rotated with respect to the position of Figs. 15, 16 and 17 ;
- Fig. 21 shows a perspective side view of a portion of the wind turbine with the rotor of Fig. 2, in a second embodiment thereof;
- Fig. 22 shows an opposed perspective side view of the portion of wind turbine with the rotor of Fig. 21 ;
- Fig. 23 shows a side view of the entire wind turbine of Figs. 21 and 22 ;
- Fig. 24 shows a side view of the entire wind turbine, in a third embodiment thereof;
- Figs. 25 and 26 show a respective schematic side and plan view of the wind turbine of Fig. 24 ;
- Figs. 27 and 28 show a schematic plan view of the wind turbine of Fig. 24, displaced by the wind thrust into two different operative positions.

The above Figures illustrate the wind turbine 5 with a pitch regulation and furling out of wind according to the invention, adapted to generate electric energy and made of relatively limited sizes, particularly for installations near inhabited residences, and arranged for operating also under conditions of strong wind, in order to generate electric energy to be utilized in the same residences, or also by other users. Of course, this wind turbine may be made also with larger sizes for being installed, alone or together with other analogous wind turbines, in locations far away from the inhabited towns for generating electric energy in quantities sufficient for supplying a large number of users.

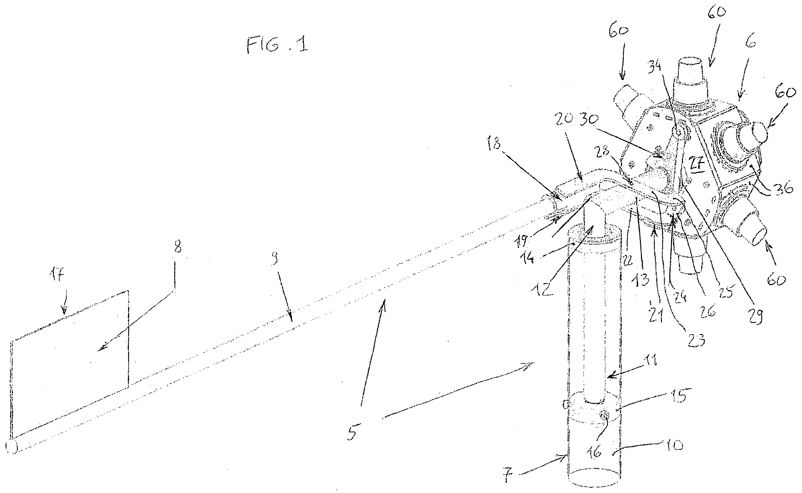

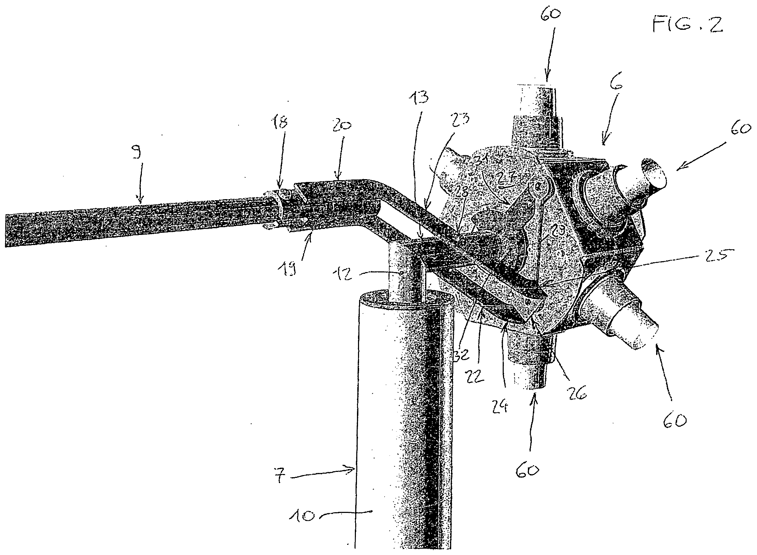

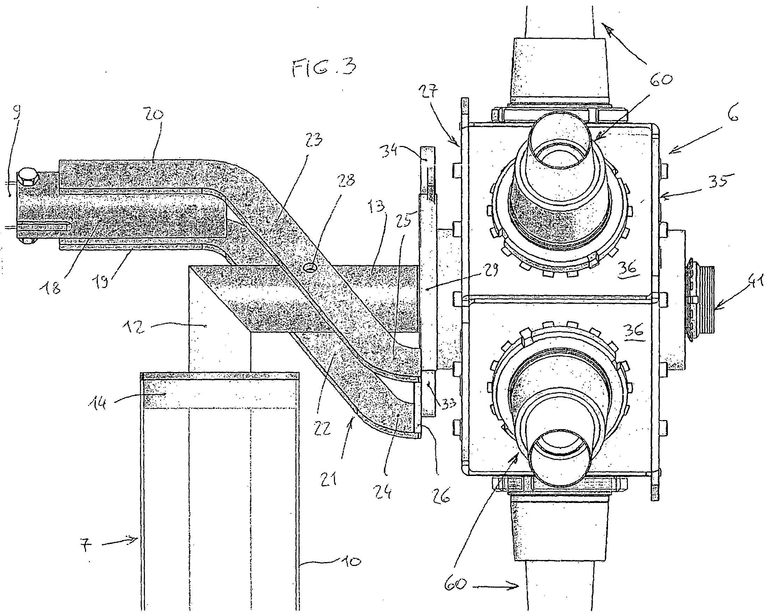

The Fig. 1 illustrates such wind turbine 5 with its various constructive component parts, and in a first embodiment thereof, while the Figs. 2 and 3 show the rotor 6 of the wind turbine, adapted to support both the rotating vanes (which in this case are partially shown) which are installed and oriented for receiving the wind thrust and so being actuated in rotation continuously, and the electric energy generator (not shown), mechanically joined to the vanes as it will be described later on, and actuated in rotation by the rotation of the same vanes, in a manner to generate electric energy by electromagnetic induction.

The component parts of the wind turbine 5 are substantially constituted by a metallic vertical support structure 7 made and installed as it will be described and having a relatively limited height, preferably comprised between about 3 and 20 meters, by the above described metallic rotor 6 which is secured in an articulated manner to the upper end portion of the support structure 7, and by a metallic tail 8 fixed to the back part of the wind turbine 5, at the free end portion of a metallic rectilinear lengthened rod 9, the other end portion of which is secured in an articulated manner to both the rotor 6 and to the upper end portion of the support structure 7, for performing the function which will be described. The vertical support structure 7 is formed by a metallic rectilinear section bar 10 of tubular shape, or other suitable geometrical shape, the lower end portion of which is secured adequately to the ground, for example by means of a metallic plate put underground (not shown) or a foundation made of concrete cast in the ground (not shown), or by other suitable supporting means secured to the ground, in a manner that the support structure 7 is still staying in this position and able to support all the component parts of the wind turbine. In turn, the upper end portion of the support structure 7 is joined to the rotor 6 and the lengthened rod 9 by an orthogonally folded section bar 11, formed by a rectilinear vertical portion 12 and a horizontal rectilinear portion 13, of which the vertical portion of section bar 12 is introduced at the upper part into the inner cavity of the tubular section bar 10, and is inserted through corresponding central through holes (not indicated) of at least an upper bearing 14 and a lower bearing 15, both inserted through the inner cavity of the tubular section bar 10 and fixed thereto by screws 16 or other fixing elements of traditional type. The section bar horizontal portion 13 has such a length as to support in an articulated manner the free end portion of the lengthened rod 9 and the rotor 6, to allow at the one hand the alternate displacement of such rod together with the relative tail 8 with respect to the pivotal position of the rod 9 in the section bar horizontal portion 13, and at the other hand the free rotation of the rotor 6 about the same section bar horizontal portion, which in this way acts as pivot for rotating the same rotor.

The tail 8 of the present wind turbine is formed by a thin metallic plate 17 having quadrangular shape or another suitable geometrical shape, which is adequately secured in an upright position to the free end portion of the lengthened rod 9, and in turn at the other end portion of the rod 9 a suitable cylindrical sleeve 18 is inserted and locked in position, to the outer surface of which there are fixed two short horizontal rectilinear flanges 19 and 20, which are identical and spaced away parallel to each other, of a metallic shaped bracket 21, which flanges are extended with two inclined rectilinear flanges 22 and 23, the respective end portions 24 and 25 of which are curved and joined to each other by a flat terminal part 26, situated near the flat rear wall 27 of the rotor 6 and co-operating therewith as it will be described later on. On the middle zone of the section rod horizontal portion 13, external to the rotor 6, the inclined flanges 22 and 23 of the shaped bracket 21 are pivoted with a stud 28, secured to section bar portion 13 in such a way that the tail 8 and the rod 9 may displace themselves and rotate in an alternate direction along a horizontal plane or an inclined plane with respect to the horizontal direction, under the conditions which will be described. As still visible in the Figs. 1-3, the bracket 21 is secured to the rotor 6 by means of a leverage formed by a short rectilinear arm 29 and a fork 30, shaped at an end portion of which with a short shank 31 and at the other end portion of which with a semi-circular portion 32, of which the eyelet shaped end portions 33 and 34 of the rectilinear arm 29 are respectively pivoted with the flat terminal part 26 of the bracket 21 and the end portion of the shank 31 of the fork 30, and are also moved away forward and not into contact with respect to the flat rear wall 27 of the rotor 6, while the semi-circular portion 32 of the fork 30 surrounds the corresponding section bar horizontal portion 13 and is supported in the interior of the rotor 6 as it will be described, in a manner that such semi-circular portion 32 may rotate with a determinate rotation angle around the section bar portion 13, with consequent displacement of the entire leverage and the bracket 21, the rod 9 and the tail 8, with an established stroke, thereby determining the alternate displacement and rotation of the tail 8 and the rod 9, and therefore also of the rotor 6 and the vanes 60 in an horizontal plane or an inclined plane with respect to the horizontal plane.

When the wind impacts the vanes 60 and the tail 8 in the normal direction and with intensities comprised within determinate and not excessive limits, the assembly tail-rod and bracket is displaced and actuated in rotation in the horizontal plane of 360°.

Then, under this condition the vanes 60 and the rotor 6 remains aligned with the tail 8 and aren't displaced from this position, so that the vanes 60 are actuated in rotation with such thrust as to generate the required quantity of electric energy with the highest efficiency.

On the contrary, under the condition in which the wind impacts the vanes 60 and the tail 8 in the same direction and reaches a high intensity, exceeding the established limits, the assembly tail-rod and bracket is displaced and actuated in rotation by the above leverage, owing to the action which will be described, in an inclined plane with respect to the horizontal plane, until said leverage reaches the other end-of-stroke position in which its rotation is stopped, with consequent stop of the displacement and the rotation of said assembly with respect to the section bar portion 13, and the rotor 6 is displaced in a misaligned position with respect to the wind direction. Then, under this condition in said end-of-stroke position of the leverage, opposite to the preceding one, the rotor 6 remains misaligned with respect to the tail 8. Afterwards, the wind impacting the tail 8 brings it back in the same starting position, aligned with the wind direction, and under this condition the rotor 6 is displaced into its misaligned position, so that the wind impacts it with a smaller power and the rotor is submitted to lesser mechanical stresses, still continuing to rotate and thus to generate the required quantity of electric energy, however with a smaller efficiency than the previous one. As described previously, the vanes 60 of the wind turbine according to the invention are installed in the rotor 6 in a manner to be able to rotate also around its own longitudinal axis, in the manner and under the conditions which will be described, with a determinate maximum keying angle, and such rotation movement of the vanes 60 is determined by the rotation mechanism which will be described.

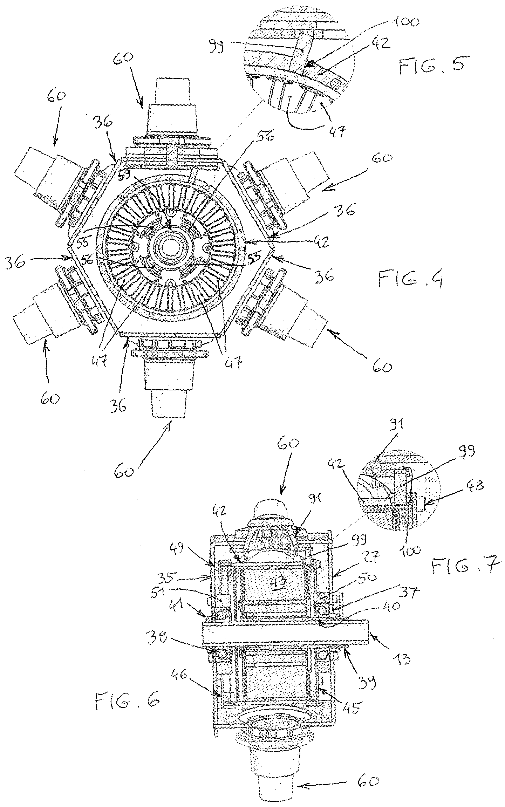

Turning now also to the Figs. 4-9, in which the configuration of the rotor 6 and the vanes mounted thereon is shown, it is noted that such rotor is substantially constituted by a box-like envelope formed by said flat rear wall 27, by an opposite flat front wall 35 parallel to and spaced away in the transversal direction from said rear wall, and by a set of peripheral walls 36 identical and joined to each other and to the relative front and rear wall, and made with the same number of the foreseen vanes of the wind turbine, for mounting the vanes as it will be described, which in the present example are constituted by six vanes.

The central zones of said rear wall 27 and front wall 35 are bored and delimit a correspondent seat for housing and securing a relative bearing 37 and 38, adapted to support both the section bar horizontal portion 13, situated in the interior of the rotor 6, and a hollow shaft 39 which is inserted through the rear bearing 37 and is extended up to near the front bearing 38, without coming into contact with this latter, thanks to the presence of the bearings 37' and 38'. Through the longitudinal through hole 40 of such hollow shaft 39 it is inserted and adequately secured the section bar portion 13, which is situated in the interior of the rotor 6, for the entire width of the same rotor, and the terminal part of the section bar portion 13 is locked into position by a front ring nut 41, so that this section bar portion 13 is supported forward by the front bearing 38, through the bearing 38', and in turn supports the inner terminal end portion of the hollow shaft 39, and backward supports through the bearing 37' the other end portion of the same hollow shaft, which in turn is supported in this position by the rear bearing 37. The rear end portion of the hollow shaft 39 is secured to the semi-circular portion 32 of the fork 30 of said leverage.

With his arrangement, the hollow shaft 39 may rotate limitedly around the bearings 37' and 38' interposed between the section bar portion 13 and the hollow shaft 39, owing to the actions which will be described, with consequent actuation in rotation also of said leverage from the one to the other one of its end-of-stroke positions, and such rotation movement of the leverage is transmitted as already described also to the assembly tail-rod and bracket. Moreover, with this arrangement the section bar portion 13 stays always still, and does not rotate. The electric energy generator is housed into and fixed to the free cavity defined in the interior of the box-like envelope of the rotor 6,which is constituted by a synchronous electric generator formed by a peripheral circular rotor 42 acting as inductor and by an inner circular stator 43, which is slightly spaced away radially from the rotor 42 and acts as armature. The peripheral circular rotor 42 is made with a diameter larger than that of the stator 43 and its outer surface is situated on a position approached, but not into contact, with the structure of the vanes 60, and is also formed by a set of inductor permanent magnets (not shown), adequately insulated to each other and fixed in the inner part of the entire circumference 44 of the rotor 42, delimited at its opposite sides with a respective side closing wall 45 and 46, each one of which is made with the same size and shape of the corresponding side and supported internally the rotor 6, and properly secured to its own side by a set of relative projected screws 48 and 49, and the lower part of each side wall 45 and 46 is arranged in correspondence of and on sliding contact with the upper surface of a relative circular ring 50 and 51, fixed to the inner surface of the corresponding rear wall 27 and front wall 35 of the rotor 6 and situated above the relative bearing 37, 38.

Each one of the bearings 37 and 38 is formed by an outer ring 52 and by an inner ring 53, delimiting a race for sliding the spheres 54 of the relative bearing.

Onto the upper surface of the outer ring 52 of each bearing it is arranged and fixed the lower surface of the relative circular ring 50 and 51. In turn, the lower surface of the inner ring 53 of each bearing is fixed to the outer surface of the hollow shaft 39.

Then, with this arrangement the rotor 42 may rotate on to the spheres 54 of the relative bearings 37 and 38 when it is actuated in rotation by the rotation of the vanes, while as already described the hollow shaft 39 may rotate limitedly with respect to the section bar portion 13, which in turn stays still. The rotor 42 of the electric generator may of course be made even with configurations of the magnets which are different that that described by way of example only, provided that it always allows to generate electric energy by electromagnetic induction, thus without departing from the protection sphere of the present invention. In turn, the inner stator 43 is formed by a set of metallic and magnetic sheets, which are identical and joined axially to each other for the entire stator circumference, so as to form a set of mill packs, the sheets of which are separated transversally the one from the other one by means of per se known electric insulating materials, in order to prevent parasitic currents to be formed, and such set of mill packs are shaped like radial pole shoes, in the example constituted by eleven pairs of magnetic poles (not indicated), and are supported by a respective side wall 57, 58, made of plastic material, and are bored centrally for the insertion of two correspondent cylindrical sleeves 59 therein, which in turn are inserted into and forced on to the hollow shaft 39. Besides, in the mill packs of the poles there are inserted and supported the induced electric windings (not indicated), into which the electric alternate voltage is generated by induction thanks to the rotation of the rotor 42, and the terminals of such electric windings are projected outward through openings (not shown) of the rotor 6, so as to be connected to the users to be supplied.

The side walls 57 and 58 of the stator 43 are provided with a plurality of radial notches 47, identical and spaced away to each other with determinate intervals, for positioning the slots (not shown) for the electric windings.

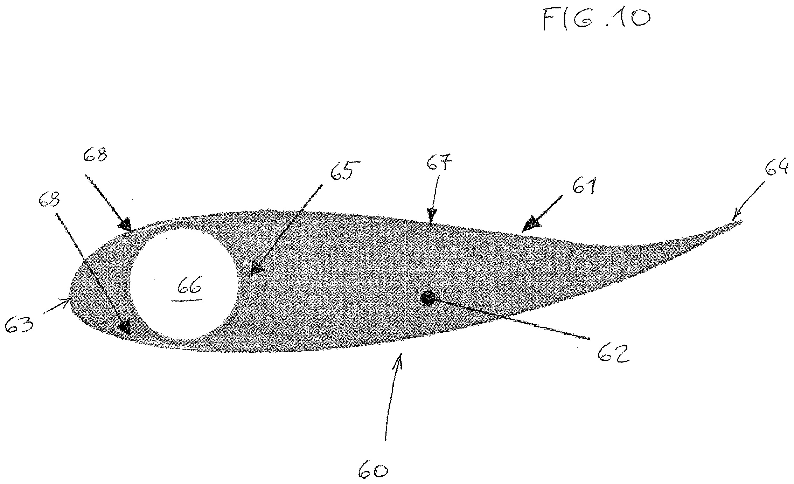

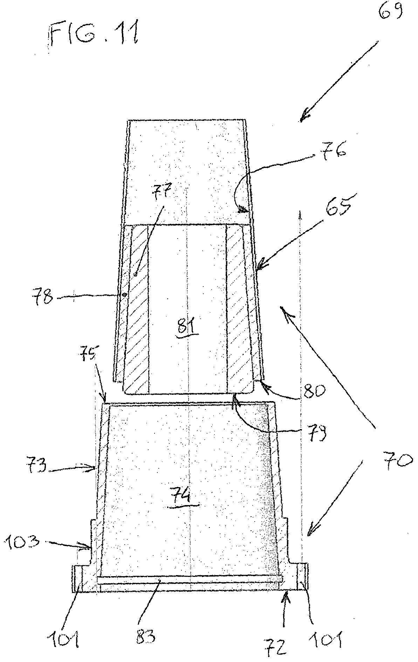

In the Fig. 10 is now described a cutaway vane 60 and its constructive structure of the present wind turbine, while in the Figs. 11-14 are described the different assembling steps of the vane with respect to the rotor 6. Each vane 60 is made of composite materials with structural parts made preferably of carbon, which are manufactured with a single die of aluminium for having a perfect reproducibility and balancing thereof.

The vane is made by stratifying the various materials which are employed, in a way to attain preferably a clear subdivision of the functions of the single layers of materials.

In this way, the manufacturing process of the vane is simplified and can be made by any supplier. As visible from the Fig. 10, each vane 60 is substantially constituted by a lengthened body 61 having an aerodynamic profile, made with a solid filler material 62 formed preferably by a bi-component foam or by foamed polystyrene or polyurethane etc.., and shaped with an elliptical formed curved end portion 63 tapered toward the other end portion 64 thereof, which has a thin made form which is slightly inclined in a determinate direction. A transversal side member 65 having reduced thickness is provided on the elliptical curved end portion 63 and made of composite materials, particularly but not exclusively of glass and/or carbon fiber, and delimiting an inner hole 66, which side member coincides perfectly in 2 segments thereof with the layers of the outer aerodynamic surface 67 of the most part of the vane length, said side member being also enclosed internally the outer surface 67 by two safety bands 68 made preferably of Kevlar, which are applied externally the same side member to said outer surface 67, to avoid the vane to be detached therefrom in extreme cases.

In the Figs. 11-14 are now described the structures or couplings 69 for mounting and disassembly the different vanes 60 of the rotor 6 of the present wind turbine.

Each structure or coupling 69 is substantially constituted by a first supporting and mounting part 70 of the relative vane and by a second part 71, in which the first part 70 with the vane is mounted, and which in turn is mounted in the rotor 6.

In particular, the first part 70 is substantially constituted by a lower base 72 of circular shape, made of metallic material, which is shaped with an upper vertical frusto-conical part 73, having an outer stepped surface, and both delimiting a correspondent inner through hole 74 which tapers slightly in correspondence of the upper edge 75 of the upper vertical part 73. The lower base 72 is adapted to be assembled to the second part 71, after that this latter has been secured in the relative correspondent application position of the rotor 6.

In turn, the inner through hole 74 of each first part 70 is adapted to receive the correspondent side member 65 of each vane 60, which has a smaller dimension for being able to be joined thereto in the manner which will be described.

Such side member is provided with an inner hole 76 for a determinate depth thereof, for inserting removably therein a correspondent frusto-conical part 77 made of metallic material, with the interposition of a correspondent first cylindrical sealing gasket 78 made of elastomeric material, in a manner that in the first mounting step of these component parts, shown in the Fig. 11, in which the frusto-conical part 77 and the gasket 78 are assembled to the side member 65, such part 77 is projected with its terminal edge 79 beyond the terminal edge 80 of the side member 65 and the gasket 78 is fully housed into the inner hole 76. Moreover, the frusto-conical part 77 is provided with an axial inner through hole 81 for performing the function which will be described.

The scope of the gasket 78 is to dampen for the maximal extent the vibrations produced by the rotation of the vanes 60, so as to prevent or to reduce as much as possible the transmission of the vibrations to the other component parts of the wind turbine.

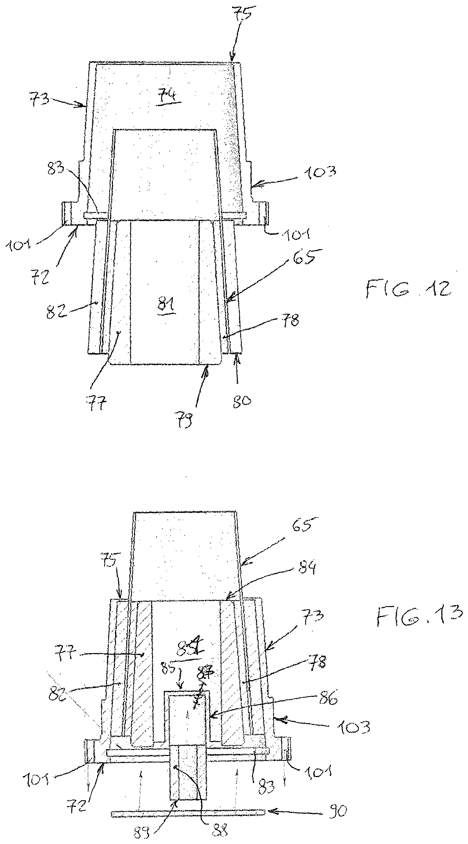

In the second mounting step of these component parts, shown in the Fig. 12, on to the outer surface of the side member 65 it is applied a second gasket of rubber or other elastomer 82, in a position correspondent to that of the first gasket 78 and for a length equal to that of this latter and which is slightly shorter than the length existing between the upper edge 75 of the upper part 73 and a circular slot 83, provided in the inner hole 74 near the lower mouthpiece thereof, and provided for the insertion of a correspondent snap ring (not illustrated), for performing the function which will be described. This second gasket 82 too has the same scope of the above first gasket 78.

In the third mounting step shown in the Fig. 13, it is noted that the side member 65 with the above mentioned component parts is inserted completely through the through hole 74 of the upper frusto-conical part 73, until the gaskets 78 and 82 enclose completely the portion of the side member 65 and the terminal edges 79, 80 respectively of the part 77 and the side member 65 are entered beyond the circular slot 83. Under this inserted condition of the gaskets 78 and 82, the same are so performing their function to dampen the vibrations as described previously, together with the adjacent component parts.

At this point, a cylindrical insert 85 is inserted through the through hole 81 of the part 77, which insert is provided with an inner cavity 86, through which a correspondent spring 88 joined with a movable wall 89 is inserted, which is adapted to be compressed by an external plug 90, which is pushed until to be held by the snap ring housed into the circular slot 83, with consequent compression of the spring 88 into said inner cavity.

Under this condition, the compression of the spring 88 provides for, thanks to the elasticity of the plastic materials constituting the insert 85, the part 77 and the upper part 73, a better adhering of the gaskets 78 and 82 in the respective application positions, thereby increasing effectively the vibration dampening action.

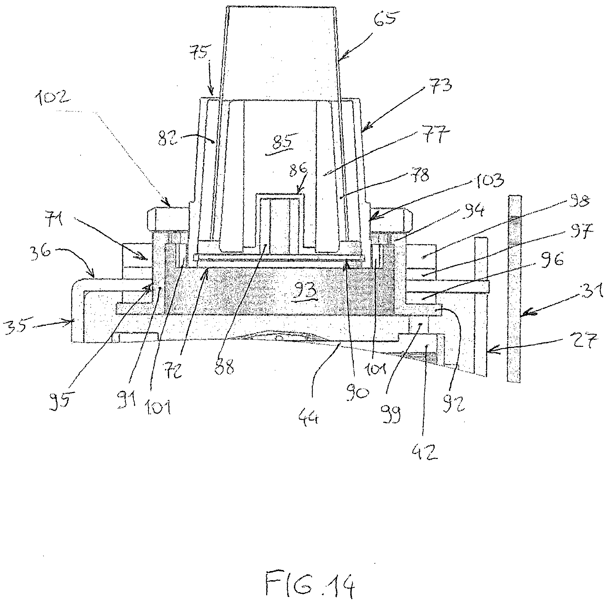

In the subsequent mounting step of the Fig. 14, all the described component parts of the first part 70 are coupled with the second part 71, which has already been assembled in the rotor 6, with consequent mounting into position of the vanes 60 of the wind turbine.

Hereinafter, it is described the manner in which such coupling is effected, after having described the conformation of the second part 71 of the coupling 69.

Such second part 71 is substantially constituted by a cylindrical sleeve 91 joined at its lower part with an enlarged cylindrical collar 92 and delimiting with this latter an inner cylindrical through hole 93, which is narrowed slightly in correspondence of the upper edge 94 of the sleeve 91. This second part 71 is assembled in the rotor 6, by inserting the cylindrical sleeve 91 from the bottom upward, through a correspondent circular through hole 95 of the relative peripheral wall 36 of the rotor 6, in a manner that the enlarged collar 92 and the sleeve 91 are respectively situated in the interior of and projected outward from the same rotor. Thereafter, a correspondent first cylindrical bearing 96 is applied on to the cylindrical collar 92, in a position interposed between such collar 92 and the overlying peripheral wall 36 of said rotor, and on to the peripheral wall 36 there are then overlapped in succession a second bearing 97 and a securing ring nut 98, having the same width of the first bearing 96, and under this condition the first and the second bearings 96 and 97 may slide on to the peripheral wall 36 with their relative surface into contact with such wall, when the sleeve 91 is actuated in rotation, together with the relative vane, with a limited rotary movement around its own longitudinal vertical axis, owing to the action which will be described. Each cylindrical collar 92 is fixed with a short stud 99 projected downward from the same collar, and the free end portion of each stud 99 is inserted steadily into a correspondent through slot 100 (see Fig. 7) provided through the circumference 44 of the rotor 42, and in this way the rotor 42 is actuated in rotation contemporaneously to the rotation of the vanes 60, and such displacement provides for, thanks to the steady engagement of each stud 99 with the correspondent slot 100 of the rotor 42, a limited contemporaneous rotation of the correspondent sleeve 91 and the vanes associated thereto and, when the action determining the rotary movement of the sleeve 91 is terminated, the rotor 42 is brought again in the initial position thereof, with consequent contemporaneous rotation of in the reverse direction also of the sleeve 91 and the vanes associated thereto, which therefore are also brought again in the initial position thereof

The coupling of each first part 70 with the second part 71 of the coupling 69 is effected, as visible from the Fig. 14, by inserting through the through hole 93 of the sleeve 91, by means of a bayonet coupling, the lower base 72 of the upper vertical part 73, with all the assembled component parts. Afterwards, these component parts are clamped in position by means of a clamping ring nut 102, which is screwed on to a correspondent outer thread of the lower step 103 of the upper vertical part 73.

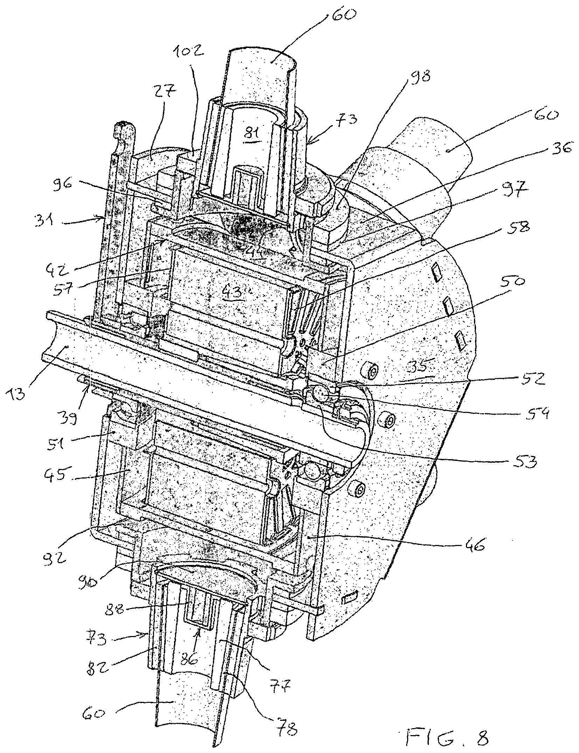

The different component parts of the present wind turbine, displaced in their starting position, are now shown in the Fig. 8.

Then, under this condition, the rotation of the rotor 42 would tend to actuate in rotation even the stator 43 and the hollow shaft 39 to which the stator is fixed, in the case in which the hollow shaft should not be constrained to the above leverage.

This continuous rotation of the stator 43 is prevented by the fact that the same stator is constrained to the hollow shaft 39 with its two cylindrical sleeves 59 coupled to each other, or to other suitable coupling elements, and that as soon as the stator 43 and therefore also the hollow shaft 39 have effected a partial rotation, such rotation is stopped by the presence of the leverage constrained with the hollow shaft 39, which has reached its end-of-stroke position. During the rotation of the rotor 42, the side walls 45 and 46 of which remain positioned in the position of Fig. 8 with respect to the relative circular rings 50 and 51, such rotation determines by electromagnetic induction the generation of electric energy in the electric windings of the stator 43, while this latter remains always still for the above specified ground. Moreover, under this condition the leverage is displaced in the end-of-stroke position illustrated in the Figs. 1-3 and 8.

In this way, as long as the vanes 60 and the tail 8 are struck by the wind in the normal direction and with intensities comprised between determinate and not excessive limits, such vanes continue to rotate with the same orientation and provide for the rotation of the rotor 42 with respect to the stator 43 always under the balance condition between the rotor torque with respect to the same stator and the torque in opposition to the stator rotation, which is produced by the leverage displaced into this end-of-stroke position, which prevents the rotation of the same stator.

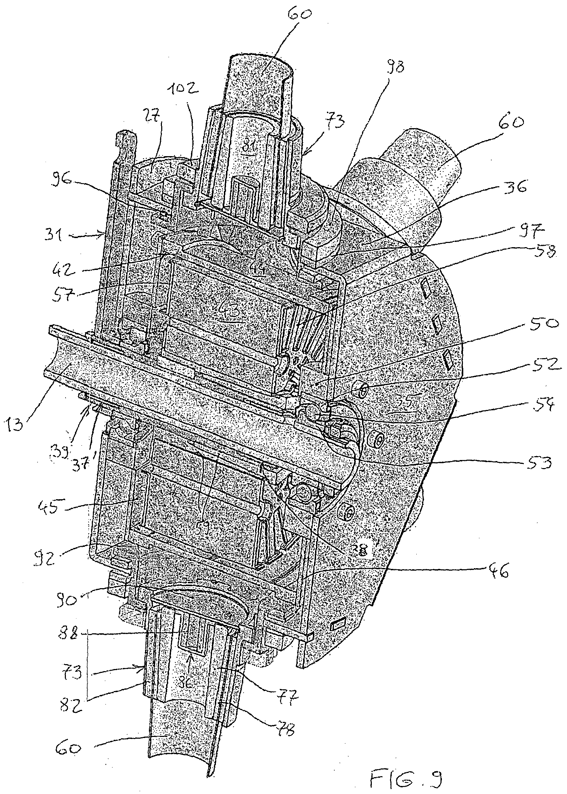

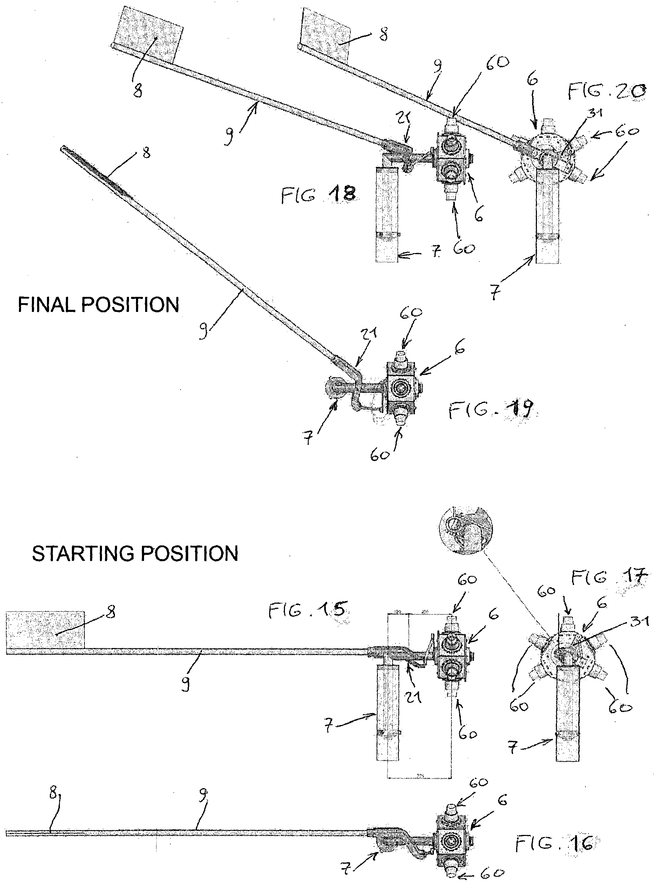

The different component parts of the present wind turbine are now shown in the Fig. 9, in which all the vanes 60 are oriented in a position rotated around their respective longitudinal axis, when the vanes 60 and the tail 8 are struck by the wind in the same direction or also in different directions, and reaches high intensities which are greater than those of the determinate limits, the rotor 42 is actuated in rotation quickly with high speeds, which are greater than the preceding ones, so that if no provisions for limiting these rotation speeds are taken, also the component parts of the wind turbine are submitted to high mechanical stresses and vibrations, with consequent risks of damaging and/or breaking of the same parts, and of an excessive and undesired generation of electric energy, with possible damages to the plants for distribution of the electric energy and in case even to the users. Then, under this operating condition, the greater rotation speed of the vanes 60 changes the balance condition between the torque of the rotor 42 with respect to the stator 43 and the torque in opposition to the rotation of the stator, as described above, so that the greater torque exerted on to the stator 43 provides for a partial rotation of the hollow shaft 39 and the stator 43, together with the leverage, and this rotation continues until the opposite end-of-stroke position of the same leverage, where such rotation is stopped by the leverage. Under this condition, as visible in the Fig. 9, the rotation of the stator 43 provides for the rotation of the hollow shaft 39 and therefore of the rod 9 and the tail 8 from the position of the Fig. 17 to the position of the Fig. 20.

Turning now to the Figs. 6, 8 and 9, the same represent the reciprocal positions between the rotor 42 and the stator 43 on the different operative conditions of the present wind turbine. From the Figs. 6 and 8 it is noted that the rotor 42 is aligned with the stator 43, and this condition is reached when the rotor 6 is both aligned and misaligned with respect to the rod 9 and the tail 8, and constitutes the normal operative condition of the eolian generator, which is attained when the vanes 60 are actuated in rotation by the wind in the normal direction and with intensities comprised within established limits.

Then, under this condition, in which the rotor 42 is actuated in rotation by the vanes 60 with a determinate torque, the stator 43 remains still for the reasons set forth, and in the electric windings thereof there are generated the induced electric voltages, which in turn produce a reaction torque which would tend to slow down the rotation speed of the rotor 42, however in this case the electric generator is designed with such characteristics that under said operative conditions this slowing down occurs in a reduced extent, or even does not occur, thereby creating a balance condition between the torque and the reaction torque.

Consequently, while the rotor 42 continues to rotate, the stator 43 remains always still in the same position and isn't displaced in the transversal direction with respect to the same rotor. Moreover, under this circumstance the vanes 60 are always kept in the normal orientation position thereof, which isn't rotated around its own longitudinal axis.

Vice versa, when the vanes 60 are struck by the wind in the same direction or in different directions with high intensities which are greater than those of the established limits, the vanes 60 begin to rotate with a larger speed, thereby generating a torque larger than the previous one, and a consequent larger reaction torque of the induced electric voltages, which provides for a consequent axial displacement of the rotor 42 with respect to the position of the stator 43, which is stationary, and therefore a sliding in the same direction of the lower parts of the side walls 45 and 46 of the rotor 42 on to the outer surface of the correspondent circular rings 50 and 51, and this sliding terminates when the screws 49 come into abutment with the front wall 35 of the rotor 6 (see also the Fig. 5).

This axial displacement of the rotor 42 provides for, thanks to the coupling of the through slot 100 of the rotor 42 with the stud 99 of the sleeve 91 of the vane coupling, the contemporaneous rotation in the same direction of the relative sleeves 91 and all the vanes connected thereto, from their starting position of the Fig. 8 to their misaligned position of the Fig. 9, by rotating around its own longitudinal axis, and during this rotation of the sleeves 91 their upper and lower surfaces slide the one below and the other one above the peripheral wall 36 of the rotor 6, and during this rotation of the vanes 60 the rotor 42 is continuously actuated in rotation by the same vanes, with speeds which are from time to time decreasing up to restore the previous balance condition, in which the vanes 60 are rotated in a reverse direction around their own longitudinal axis, by bringing them back in the starting orientation position thereof. Of course, the coupling between the rotor 42 and the sleeve 91 may occur also with component elements which are different than those indicated by way of example, thus without departing from the protection sphere of the present invention. This system for correcting the vanes orientation angle may be utilized also for orienting at the beginning the vanes in a misaligned position thereof and then, during the rotation of the vanes beyond the established speed, for bringing them back in the same normal orientation position thereof, for the same above described effect, in a manner to thereby increase the performances attained by the wind turbine.

An example of this may be obtained by positioning the stud 99 of the rotor 42 and the through slot 100 of the sleeve 91 in a position opposite to that indicated previously, or by providing any possible other suitable systems.

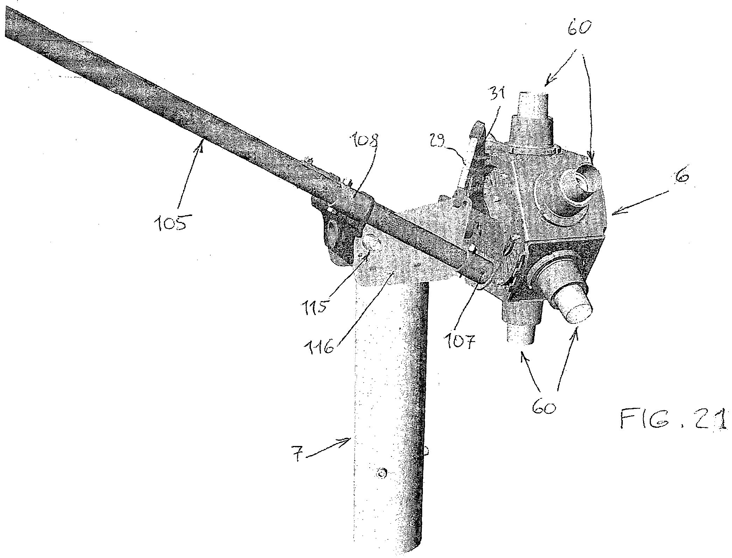

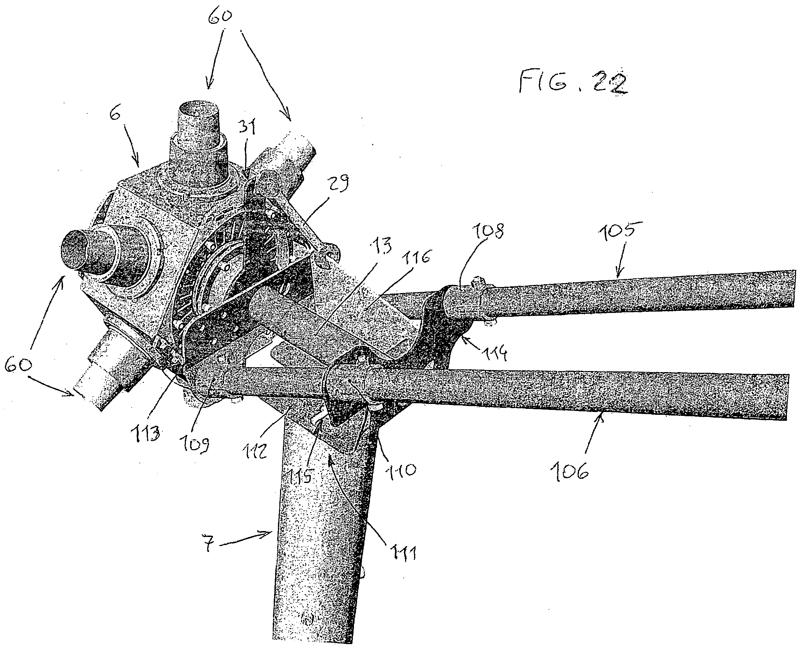

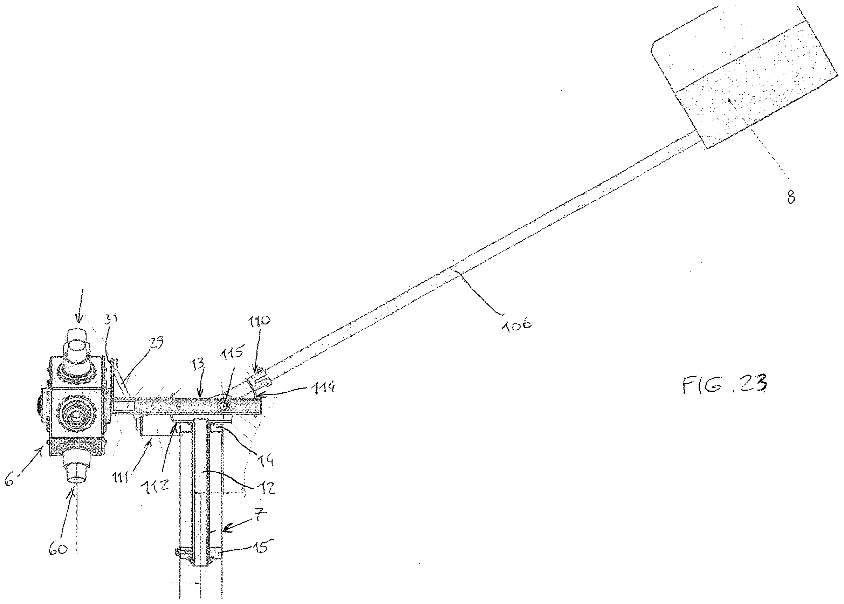

In the Figs. 21-23 it is now shown a second embodiment of the present wind turbine, which is always constituted by the support structure 7, the rotor 6, the vanes 60 and the tail 8, which is secured to and supported in an articulated manner by the support structure 7.

However, in this case the support and the articulation of these component parts in the support structure 7 is effected in a different way, and in particular the tail 8 is secured to the free end portion of two rectilinear lengthened rods 105 and 106, which are parallel and slightly spaced away to each other, the opposite end portions of which are inserted in to two correspondent short bushes 107, 108 and 109, 110, in turn secured into two different positions in a folded support bracket 111 formed by a flat base plate 112 which is pivoted on to the upper end portion of the support structure 7, for rotating around a horizontal plane, by a vertical back part 113 supporting the two back bushes 107 and 109, and is also bored centrally for the passage and the support of the section bar horizontal portion 13, and by a vertical front part 114 supporting the two bushes 108, 110 and the front end portion of the section bar horizontal portion 13. The support bracket 111 is pivoted, through a transversal stud 115, with the section bar horizontal portion 13, and the end portions of such stud 115 are fixed the one laterally with the bracket 111 and the other one with a flat side plate 116, to which the leverage referred to is engaged.

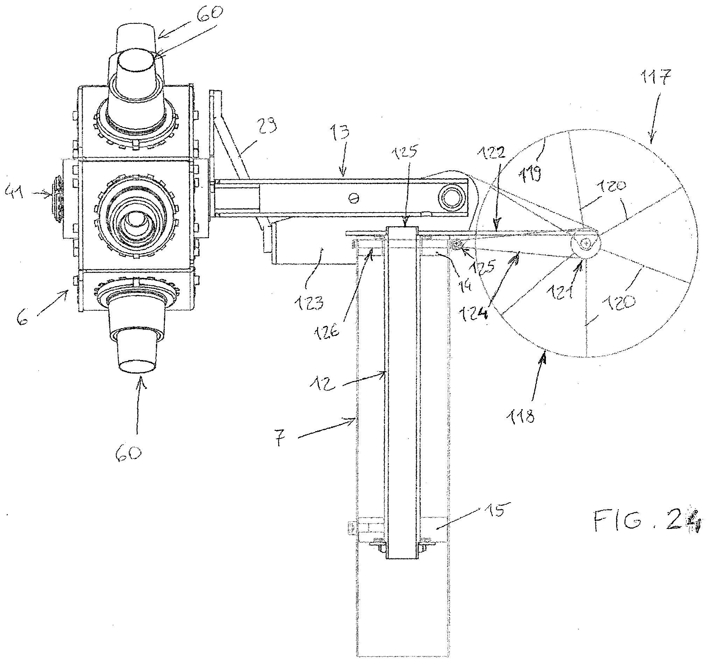

Therefore, also in this case the tail 8 and the rotor 6 with the relative vanes may displace themselves in an alternate direction along a horizontal plane or an inclined plane with the same movements of the wind turbine of the Figs. 1-3 and 15-20, and the vanes 60 may still be rotated as previously. Finally, in the Figs. 24-28 it is shown the third embodiment of the present wind turbine, and of some component parts thereof, and also in this case the wind turbine is still constituted by the support structure 7, the rotor 6, the vanes 60 and the tail 117 which is secured to and supported in an articulated manner by the support structure 7. However, in this case the tail 117 is shaped in a different manner with respect to the preceding tail 8, still performing the same function thereof.

In particular, the present tail 117 is substantially constituted by a wheel 118 formed by a circular peripheral wall 119 and a plurality of spoke elements 120, distributed equally spaced angularly from each other, and secured at an end portion thereof internally the peripheral wall 119 and converging toward the centre of the same wheel, and the other end portions thereof are all fixed to a hub element 121, arranged in the wheel centre, and supported to the end portion of a rectilinear arm 122, the other end portion of which is pivoted in the rear lower zone of a shaped bracket 123, which in turn is adequately supported on to the upper part of the support structure 7 and joined to said leverage, which is still constituted by the same previously described component parts.

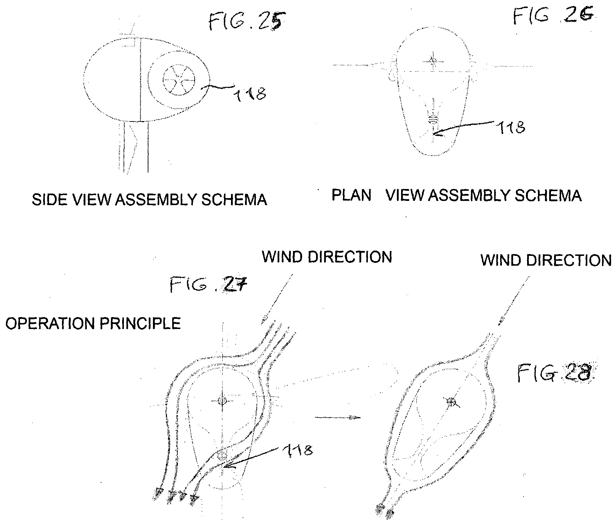

Besides, the free end portion of the section bar horizontal portion 13 is also secured to the upper and rear end portion of the shaped bracket 123. The hub element 121 actuates in rotation, by means of a belt 124, a gear 125 pivoted in the shaped bracket 123, in turn engaging a fifth wheel 126 supported on the upper part of the support structure 7, in such a manner as to provide for the rotation of the bracket and the rotor in the same wind direction, in the positions indicated in the Figures 25-28.

The Figs. 25-28 represent in a schematic form the wind turbine of the above third embodiment thereof, with a respective side view and a plan view, while in the Figs. 27 and 28 this wind turbine is still represented in a schematic form, with a plan view, with the wind coming from the same direction, however with the generator assembly in the first case in the misaligned starting position with respect to the wind direction and in the second case in the arrival position in the same wind direction.

## Claims

1. A wind turbine with a pitch regulation and furling out of wind, which is made of relatively limited sizes, particularly for installations on inhabited environments, and arranged for operating also under conditions of strong wind, in order to generate electric energy for the use in the same inhabited residences, or also for being used by other users, comprising a vertical support structure (7) secured to the ground, to a metallic plate or to a foundation etc.., and having a limited height, preferably comprised between about 3 and 20 meters ; a rotating rotor (6) supported in an articulated manner by the support structure (7) ; rotating wind vanes (60) supported by the rotating rotor (6) and installed and oriented for receiving the wind thrust and for rotating around their own longitudinal axis ; a tail (8 ; 117) fixed to the back part of the wind turbine and supported in an articulated manner by said support structure (7) and adapted to be displaced and rotated in an alternate manner by the wind thrust, together with the rotating rotor (6) and the rotating vanes (60), in an horizontal plane or an inclined plane with respect to the horizontal plane ; support and articulation means (21 ; 11 ; 123), an end portion of which is pivoted with both said rotor (6) through leverage means (29, 30) and with the support end portion of said support structure (7), and the other end portion of which is connected to support means (9 ; 105, 106 ; 122) secured to the relative tail (8 ; 117) ; and also comprising a synchronous electric energy generator (42, 43), which is mechanically connected to said wind vanes (60) and actuated in rotation by the rotation of the same wind vanes, so as to generate electric energy by electromagnetic induction, said electric energy generator (42, 43) comprising at least a peripheral rotor (42) acting as inductor magnet and an inner fixed stator (43) acting as armature, both housed in the interior of said rotor (6), said rotor (42) being supported by a horizontal rectilinear portion i. e. a central stud (13), joined to said support structure (7), and being adapted to be actuated into rotation by the rotation of said wind vanes (60) through coupling means (99, 100), and said armature (43) being provided with the induced electric windings and supported by said rectilinear portion (13), in a way to be able to rotate limitedly around thereto with an established stroke, wherein said rotor (6) is constituted substantially by a box-like envelope formed by a flat rear wall (27), an opposite flat front wall (35) which is parallel to and spaced away in the transversal direction from said rear wall (27), and a set of peripheral walls (36) which are identical and joined to each other and to the relative rear and front walls (27, 35), and made with the same number of the foreseen vanes (60) of the wind turbine, the central zones of said rear wall (27) and front wall (35) being bored and delimiting a correspondent seat for housing and securing a relative bearing (37, 38), adapted to support both the section bar horizontal portion (13), situated in the interior of said rotor (6), and a hollow shaft (39) which is inserted through the rear bearing (37) and is extended up to near the front bearing (38), without coming into contact with this latter, thanks to the presence of further bearings (37', 38') interposed between said section bar portion (13) and said hollow shaft (39), and wherein through the longitudinal through hole (40) of said hollow shaft (39) it is inserted and adequately secured said section bar portion (13), which is situated in the interior of said rotor (6) for the entire width of the same rotor, in a way that the terminal part of the section bar portion (13) is locked into position by a front ring nut (41), so that this section bar portion (13) is supported forward by the front bearing (38), through the further bearing (38'), and in turn supports the inner terminal end portion of the hollow shaft (39), and backwards supports through the further bearing (37') the other end portion of the same hollow shaft, which in turn is supported in this position by the rear bearing (37), wherein each one of said bearings (37, 38) is formed by an outer ring (52) and by an inner ring (53), delimiting a race for sliding the spheres (54) of the relative bearing, and on the upper surface of the outer ring (52) of each bearing it is arranged and fixed the lower surface of a relative circular ring (50, 51), fixed to the inner surface of the corresponding rear wall (27) and front wall (35) of said rotor (6), an wherein the lower surface of the inner ring (53) of each bearing is fixed to the outer surface of said hollow shaft (39), under the condition in which the peripheral rotor (42) of said electric energy generator (42, 43) may rotate on to the spheres (54) of the relative bearings (37, 38) when it is actuated in rotation by the rotation of the wind vanes (60), and **characterized in that** said leverage means are formed by a short rectilinear arm (29) and a fork (30), which is shaped at an end portion of which with a short shank (31) and at the other end portion of which with a semi-circular portion (32), wherein the eyelet shaped end portions (33, 34) of the rectilinear arm (29) are respectively pivoted with said support and articulation means (21 ; 11 ; 123) and with the end portion of the shank (31) of said fork (30), and are also moved away forward and not into contact with respect to the flat rear wall (27) of said rotor (6) and co-operating therewith, while the semi-circular portion (32) of the fork (30) surrounds the corresponding horizontal portion (13) and is secured to the rear end portion of said hollow shaft (39), in a way that with this arrangement the hollow shaft (39) may rotate limitedly around said further bearings (37', 38'), thereby actuating in the same direction also said leverage means (29, 30), which may rotate freely around said section bar horizontal portion (13) with a stroke established by end-of-stroke positions of the same leverage means, while the section bar portion (13) remains always stationary and does not rotate, and wherein
the peripheral rotor (42) of said electric energy generator (42, 43) is made with a diameter larger than that of said stator (43), of stationary type, and is slightly spaced away radially from the same stator, and with its outer surface is situated in a position approached, but not into contact, with the structure of said vanes (60), and is also formed by a set of inductor permanent magnets, adequately insulated to each other and fixed in the inner part of the entire circumference (44) of the rotor (42), which is delimited at its opposite sides with a respective side closing wall (45, 46), each one of which is made with the same size and shape of the corresponding side and supported internally said rotor (6), and properly secured to its own side by means of a set of relative projected screws (48, 49) or similar elements, and the lower part of each side wall (45, 46) is arranged in correspondence to and into sliding contact with the upper surface of the relative said circular ring (50, 51), and wherein
the inner stator (43) of said electric energy generator (42, 43) is formed by a set of metallic and magnetic sheets, which are identical and joined axially to each other for the entire stator circumference, so as to form a set of mill packs, the sheets of which are separated transversally the one from the other one by means of per se known electric insulating materials, in order to prevent parasitic currents to be formed, and such set of mill packs being shaped like radial pole shoes, in the example formed by eleven pairs of magnetic poles and supported by a respective side wall (57, 58), and are bored centrally for the insertion of two correspondent cylindrical sleeves (59) therein, which are coupled to each other or to other suitable coupling elements, which in turn are inserted into and forced on to said hollow shaft (39), and that in the mill packs of the magnetic poles there are inserted and supported the induced electric windings, into which the electric alternate voltage is generated by induction thanks to the rotation of said rotor (42), and the terminals of such electric windings are projected through openings of the rotor (6), so as to be connected to the users to be supplied, and that the side walls (57, 58) of the stator (43) are provided with a plurality of radial notches (47), which are identical and spaced away to each other with determinate intervals, for positioning the slots for the electric windings, and wherein
said rotor (42) during its rotation exerts on to said stator (43) a force tending to actuate this latter into rotation, together with said hollow shaft (39), against a force opposed to the rotation of the same stator, which is determined by the displacement of said leverage means (29, 30) in either one of their end-of-stroke positions, in such a way that when the vanes (60) and the tail (8 ; 117) are struck by the wind in the normal direction and with intensities comprised within determinate and not excessive limits, the tail (8 ; 117) is displaced and actuated in rotation in the horizontal plane of 360°, and under this condition the vanes (60) and the rotor (6) remains aligned with the tail (8 ; 117) and aren't displaced from this position, so that the vanes (60) are actuated in rotation with the same orientation and aren't rotated around their own longitudinal axis, and provide for the rotation of said rotor (42) with respect to said stator (43), and with such thrust as to generate the required quantity of electric energy with the highest efficiency, always under the balance condition between the rotor torque with respect to the same stator, and the torque in opposition to the stator rotation, which is produced by the leverage means (29, 30) constrained with the hollow shaft (39), which has reached its end-of-stroke position, by stopping the partial rotation of the stator (43) and therefore also of the hollow shaft (39) with its cylindrical sleeves (59) coupled to each other, and that when the vanes (60) and the tail (8 ; 117) are struck by the wind in the same direction or also in different directions and reaches intensities which are greater than those of the determinate limits, wherein said vanes (60) rotate with a speed greater than the previous one, the greater torque exerted on to said stator (43) provides for a partial rotation of the hollow shaft (39) and the stator (43), together with said leverage means (29, 30), and this rotation continues until the opposite end-of-stroke position of the same leverage means, where such rotation is stopped by the leverage means, and the rotor (6) is displaced in a misaligned position with respect to the wind direction, and remains misaligned with respect to the tail (8 ; 117), and the wind impacting the tail (8 ; 117) brings it back in the same starting position, aligned with the wind direction, and under this misaligned position of the rotor (6) the wind impacts it with a smaller power and the rotor (6) is submitted to lesser mechanical stresses, still continuing to rotate and thus to generate the required quantity of electric energy, however with a smaller efficiency than the previous one, and under this condition said vanes (60) are rotated around their own longitudinal axis into their misaligned position through said coupling means (99, 100), and are rotated with rotation speeds which are progressively decreasing until to restore said first position of the rotor (42), in which the vanes (60) are rotated in the reverse direction around their own longitudinal axis, by bringing them back into their initially oriented position.

2. Wind turbine according to claim 1, **characterized in that** said support and articulation means comprise a metallic bracket (21) shaped with two short horizontal rectilinear flanges (19, 20), which are identical and spaced away parallel from each other, and secured to the outer surface of a short cylindrical sleeve (18), inserted and locked in position to the end portion of a lengthened rod (9) secured with its free end portion to said tail (8), said flanges (19, 20) being extended with two inclined rectilinear flanges (22 and 23), the respective free end portions (24 and 25) of which are curved and joined to each other by a flat terminal part (26), situated near the flat rear wall (27) of said rotor (6) and co-operating therewith, said inclined flanges (22, 23) of said bracket (21) being pivoted with a stud (28) in the middle zone of said section bar horizontal portion (13), which is external to said rotor (6), in such a way that said tail (8) and said rod (9) may displace themselves either in said horizontal plane or in said inclined plane.

3. Wind turbine according to claim 1, **characterized in that** said support means are constituted by two lengthened rectilinear rods (105, 106), which are parallel and slightly spaced away from each other, to the free end portions of which said tail (8) is fixed, and the opposite end portions of which are inserted into a respective rear bush (107, 109) and front bush (108, 110).

4. Wind turbine according to claim 3, **characterized in that** said support and articulation means comprise a folded supporting bracket (111), formed by a flat base plate (112) which is pivoted on the upper end portion of said support structure (7), for rotating around a horizontal plane ; by a vertical rear part (113) supporting said two rear bushes (107, 109), and is also bored centrally for the passage and the support of said section bar horizontal portion (13) ; and by a vertical front part (114) supporting the two front bushes (108, 110) and the front end portion of the section bar horizontal portion (13), said supporting bracket (111) being pivoted by means of a transversal stud (115) with the section bar horizontal portion (13), and the end portions of said stud (115) being secured the one laterally to the bracket (111) and the other one to a side flat plate (116), to which said leverage means are engaged.

5. Wind turbine according to claim 1, **characterized in that** each wind vane (60) is made of composite materials provided with structural parts made preferably of carbon, manufactured with a single die of aluminium for having a perfect reproducibility and balancing, and is obtained with layers of the different employed materials, in a way to attain a clear distinction of the functions of the single layers of materials, and is substantially constituted by a lengthened body (61) having an aerodynamic profile, made with a solid filler material (62) formed preferably by a bi-component foam or by foamed polystyrene or polyurethane, etc.. and shaped with an elliptical formed curved end portion (63) tapered toward the other end portion (64) thereof, which has a thin made form which is slightly inclined in a determinate direction ; and it is constituted by a transversal side member (65) provided on the elliptical curved end portion (63) and made of composite materials, particularly but not exclusively of glass and/or carbon fiber, and delimiting an inner hole (66), which side member coincides perfectly in 2 segments thereof with the layers of the outer aerodynamic surface (67) of the most part of the length of the wind vane (60), said side member (65) being also enclosed internally the outer surface (67) by two safety bands (68) made preferably of Kevlar, which are applied externally the same side member to said outer surface (67), to avoid the wind vane to be detached therefrom.

6. Wind turbine according to claim 5, **characterized in that** said mounting and supporting means (70,71) for said wind vanes (60) comprise a first support part (70) for assembling the relative wind vane (60), and a second part (71) in which said first part (70) with the wind vane is assembled, which part in turn is assembled in the rotor (6).

7. Wind turbine according to claim 6, **characterized in that** said first part (70) is substantially constituted by a lower base (72) of circular shape, made of metallic material, shaped with an upper vertical frusto-conical part (73) having an outer stepped surface, and both delimiting a correspondent inner through hole (74) which tapers slightly in correspondence of the upper edge (75) of the upper vertical part (73), said lower base (72) being adapted to be assembled to the second part (71) after that this latter has been secured in the relative application position of said rotor (6), and said through hole (74) being adapted to receive the correspondent side member (65) of each wind vane (60).

8. Wind turbine according to claim 7, wherein
said side member (65) is provided with an inner hole (76) for a determinate depth thereof, for inserting removably therein a correspondent frusto-conical part (77) made of metallic material, with the interposition of a correspondent first cylindrical sealing gasket (78) made of elastomeric material, in a manner that in the first assembling step of these component parts, in which the frusto-conical part (77) and the gasket (78) are assembled to the side member (65), such part (77) is projected with its terminal edge (79) beyond the terminal edge (80) of the side member (65) and the gasket (78) is fully housed into the inner hole (76), said gasket (78) being adapted to dampen for the maximal extent the vibrations produced by the rotation of the wind vanes (60), so as to prevent or to reduce as much as possible the transmission of the vibrations to the other component parts of the wind turbine ; **characterized in that** in the second assembling step of these component parts, a second gasket of rubber or other elastomer (82) is applied on to the outer surface of the side member (65), in a position correspondent to that of the first gasket (78) and for a length equal to that of this latter and which is slightly shorter than the length existing between the upper edge (75) of the upper part (73) and a circular slot (83) provided in the inner hole (74), near the lower mouthpiece thereof, and provided for the insertion of a correspondent snap ring, said gasket (82) performing the same function of said first gasket (78) described as above ; that in the third assembling step said side member (65) with the assembled component part is inserted completely through said through hole (74), until the gaskets (78, 82) enclose completely the portion of the side member (65), thereby performing their function to dampen the vibrations as previously described, and the terminal edges (79, 80) respectively of the part (77) and the side member (65) are entered beyond the circular slot (83), then a cylindrical insert (85) provided with an inner cavity (86) is inserted through the through hole (81) of said part (77), cavity (86) through which a correspondent spring (88) joined with a movable wall (89) is inserted, which spring is adapted to be compressed by an external plug (90), which is pushed until to be held by the snap ring housed into the circular slot (83), with consequent compression of the spring (88), and under this condition the compression of the spring (88) provides for, thanks to the elasticity of the plastic materials constituting the insert (85), the part (77) and the upper part (73), a better adhering of the gaskets (78, 82) in the respective application positions, thereby increasing effectively the vibration dampening action ; and wherein
in the subsequent assembling step all the described component parts of the first part (70) are coupled with the second part (71), which has already been assembled in the rotor (6), with consequent assembling into position of the wind vanes (60) of the wind turbine.

9. Wind turbine according to claim 8, **characterized in that** said second part (71) is substantially constituted by a cylindrical sleeve (91) joined at its lower part with an enlarged cylindrical collar (92) and delimiting with this latter an inner cylindrical through hole (93), which is narrowed slightly in correspondence of the upper edge (94) of the sleeve (91), said second part (71) being assembled in the rotor (6) by inserting the cylindrical sleeve (91) from the bottom upward, through a correspondent circular through hole (95) of the relative peripheral wall (36) of the rotor (6), in a manner that the enlarged collar (92) and the sleeve (91) are respectively situated in the interior of and projected outward from the same rotor, and by applying on to the cylindrical collar (92) a correspondent first cylindrical bearing (96), in a position interposed between such collar (92) and the overlying said peripheral wall (36), on to which then there are overlapped in succession a second bearing (97) and a securing ring nut (98), having the same width of the first bearing (96), and under this condition the first and the second bearing (96, 97) may slide on to the peripheral wall (36) with their relative surface into contact with such wall, when the sleeve (91) is actuated in rotation, together with the relative wind vane (60), with a limited rotary movement around its own longitudinal vertical axis.

10. Wind turbine according to claim 9, **characterized in that** said coupling means comprise a short stud (99) fixed into each cylindrical collar (92) and projected downward from the same collar, and a correspondent through slot (100) provided through the circumference (44) of the rotor (6), wherein the free end portion of each stud (99) is inserted steadily, in a way that the rotor (42) be actuated in rotation contemporaneously to the rotation of the wind vanes (60), and such displacement provides for, thanks to the steady engagement of each stud (99) with the correspondent slot (100) of the rotor (42), a limited contemporaneous rotation of the correspondent sleeves (91) and the wind vanes associated thereto and, when the action determining the rotary movement of the sleeves (91) is terminated, the rotor (42) is brought again in the initial position thereof, with consequent contemporaneous rotation in the reverse direction also of the sleeves (91) and the wind vanes associated thereto, which therefore are also brought again in the initial position thereof.

11. Wind turbine according to claim 10, **characterized in that** each first part (70) is coupled to the second part (71) by inserting through said through hole (93), by means of a bayonet coupling or the like, said lower base (72) with all the assembled component parts, and by clamping subsequently these component parts in position, by means of a fixing ring nut (102), which is screwed on to a correspondent outer thread of the lower step (103) of said upper vertical part (73).

12. Wind turbine according to the preceding claims, **characterized in that** said tail (117) is substantially constituted by a wheel (118) formed by a circular peripheral wall (119) and a plurality of spoke elements (120), distributed equally spaced angularly from each other, and secured at an end portion thereof internally the peripheral wall (119) and converging toward the centre of the same wheel, and the other end portions of which are all fixed to a hub element (121), arranged in the wheel centre, and supported to the end portion of a rectilinear arm (122), the other end portion of which is pivoted in the rear lower zone of a shaped bracket (123), which in turn is adequately supported on to the upper part of the support structure (7) and joined to said leverage means, and that on the upper and rear end portion of the shaped bracket (123) it is also secured the free end portion of the section bar horizontal portion (13), said hub element (121) being adapted to actuate in rotation, by means of a belt (124) or the like, a gear (125) pivoted in the shaped bracket (123), and in turn engaging a fifth wheel (126) supported on the upper part of the support structure (7), in such a manner as to provide for the rotation of the bracket and the rotor in the same wind direction, into different positions.

## Patentansprüche

1. Eine Windturbine mit einer Pitchreglung und Aufrollung aus dem Wind, die mit relativ begrenzten Abmessungen gemacht ist, insbesondere für Installationen in bewohnten Gegenden, und angeordnet ist, um auch unter Bedingungen von starkem Wind zu arbeiten, um elektrische Energie zur Verwendung in den Wohnhäusern oder zur Verwendung durch andere Nutzer zu erzeugen, enthaltend eine vertikale Stützenstruktur (7), die an dem Boden an einer metallischen Platte oder einem Fundament etc. befestigt ist, und eine begrenzte Höhe von vorzugsweise zwischen etwa 3 und 20 m aufweist; einen rotierenden Rotor (6), der auf eine gelenkige Weise von der Stützenstruktur (7) gehalten ist; rotierende Windflügel (60), die von dem rotierenden Rotor (6) gehalten sind, und eingebaut und ausgerichtet sind, um den Winddruck aufzunehmen und um ihre eigene longitudinale Achse zu rotieren; ein Heckstück (8; 117), das an dem hinteren Teil der Windturbine befestigt und auf gelenkige Weise von der Stützenstruktur (7) gehalten ist und in der Lage ist, auf eine alternierende Weise von dem Winddruck verlagert und gedreht zu werden, zusammen mit dem rotierenden Rotor (6) und den rotierenden Flügeln (60), in einer horizontalen Ebene oder einer geneigten Ebene bezüglich der horizontalen Ebene; Halte- und Gelenkmittel (21; 11; 123), von denen ein Endabschnitt mit dem Rotor (6) durch Hebelmittel (29, 30) und mit dem Endabschnitt der Stützenstruktur (7) gelenkig verbunden ist und deren anderer Endabschnitt mit Haltemitteln (9; 105, 106; 122) verbunden ist, die an dem Heckstück (8; 117) befestigt sind; und ferner enthaltend einen Synchrongenerator (42, 43) für elektrische Energie, der mechanisch mit den Windflügeln (60) verbunden ist und durch die Rotation der Windflügel in Rotation versetzt wird, um elektrische Energie durch elektromagnetische Induktion zu erzeugen, wobei der elektrische Energiegenerator (42, 43) wenigstens einen äußeren Rotor (42), der als Induktormagnet wirkt, und einen inneren fest stehenden Stator (43) aufweist, der als Anker wirkt, die beide in dem Inneren des Rotors (6) untergebracht sind, wobei der Rotor (42) von einem horizontalen geradlinigen Abschnitt, d.h. einem mittigen Stift (13) gehalten ist, der an der Stützenstruktur (7) angebracht ist, und in der Lage ist, durch die Drehung der Windflügel (60) durch Kupplungsmittel (99, 100) in Rotation versetzt zu werden, wobei der Anker (43) mit den induzierten elektrischen Wicklungen versehen ist und von dem geradlinigen Abschnitt (13) auf eine Weise gehalten ist, dass er begrenzt mit einem festgelegten Hub rotieren kann, wobei der Rotor (6) ein im wesentlichen Box-ähnliches Gehäuse aufweist, das durch eine flache hintere Wand (27), eine gegenüberliegende flache vordere Wand (35), die parallel verläuft und von der hinteren Wand (27) in Querrichtung beabstandet ist, und einen Satz von äußeren Wänden (36) gebildet ist, die identisch sind und miteinander und mit der hinteren Wand und der vorderen Wand (27, 35) verbunden sind und mit derselben Anzahl der vorgesehenen Flügel (60) der Windturbine versehen sind, wobei die zentrale Zone der hinteren Wand (27) und der vorderen Wand (35) gebohrt sind und einen Sitz zur Aufnahme und Befestigung von zugehörigen Lagern (37, 38) begrenzen, um den horizontalen Querriegelabschnitt (13), angeordnet in dem Inneren des Rotors (6), und eine hohle Welle (39) zu halten, die durch das hintere Lager (37) eingesetzt ist und sich bis nahe dem vorderen Lager (38) erstreckt, ohne mit dem letzteren in Berührung zu geraten, infolge der Anordnung von weiteren Lagern (37', 38'), die zwischen den Querriegelabschnitt (13) und die hohle Welle (39) eingesetzt sind, wobei durch die longitudinale Durchgangsbohrung (40) der hohlen Welle (39) der Querriegelabschnitt (13) eingesetzt und adäquat befestigt ist, der in dem Inneren des Rotors (6) über die gesamte Breite des Rotors auf eine Weise angeordnet ist, dass der Endabschnitt des Querriegelabschnitts (13) durch eine vordere Ringmutter (41) in Position verriegelt ist, so dass dieser Querriegelabschnitt (13) vorne durch das vordere Lager (38), durch das weitere Lager (38'), gelagert ist und seinerseits den inneren Endabschnitt der hohlen Welle (39) hält, und rückwärts durch das weitere Lager (37') den anderen Endabschnitt der hohlen Welle hält, die ihrerseits in dieser Position durch das hintere Lager (37) gehalten ist, wobei jedes der Lager (37, 38) durch einen äußeren Ring (52) und durch einen inneren Ring (53) gebildet ist, die eine Laufbahn für Gleitkugeln (54) des jeweiligen Lagers begrenzen, und wobei auf der Oberseite des äußeren Rings (52) jedes Lagers die untere Fläche eines zugehörigen Kreisrings (50, 51) angeordnet und befestigt ist, die mit der inneren Fläche der zugehörigen hinteren Wand (27) und der vorderen Wand (35) des Rotors befestigt ist, und wobei die untere Fläche des inneren Rings (53) jedes Lagers an der äußeren Fläche der hohlen Welle (39) unter der Bedingung befestigt ist, bei der der äußere Rotor (42) des elektrischen Energiegenerators (42, 43) auf den Kugeln (54) der zugehörigen Lager (37, 38) rotieren kann, wenn er durch Rotation der Windflügel (60) in Rotation versetzt ist, und **dadurch gekennzeichnet, dass** die Hebelmittel durch einen kurzen geradlinigen Arm (29) und eine Gabel (30) gebildet sind, die an einem Endabschnitt mit einem kurzen Schenkel (31) und an dem anderen Endabschnitt mit einem halbkreisförmigen Abschnitt (32) geformt ist, wobei die ösenartig geformten Endabschnitte (33, 34) des geradlinigen Arms (29) jeweils verbunden sind mit Halte- und Gelenkmitteln (21; 11; 123) und mit dem Endabschnitt des Schenkels (31) der Gabel (30) und außerdem vorwärts bewegt sind und nicht in Kontakt mit der flachen Rückwand (27) des Rotors (6) stehen und damit zusammen wirken, während der halbkreisförmige Abschnitt (32) der Gabel (30) den entsprechenden horizontalen Abschnitt (13) umgibt und an dem hinteren Endabschnitt der hohlen Welle (39) auf eine Weise befestigt ist, dass bei dieser Anordnung die hohle Welle (39) begrenzt um die weiteren Lager (37', 38') rotieren kann, hierbei in der selben Richtung auch die Hebelmittel (29, 30) betätigt, die frei um den horizontalen Querriegelabschnitt (13) mit einem Hub rotieren kann, der durch die End-Hub-Positionen der Hebelmittel bestimmt ist, während der Querriegelabschnitt (13) stets stationär bleibt und nicht rotiert, und wobei der äußere Rotor (42) des elektrischen Energiegenerators (42, 43) einen Durchmesser hat, der größer ist als derjenige des Stators (43) des stationären Typs und radial von dem Stator etwas beabstandet ist und wobei seine Außenfläche nahe der Struktur der Flügel (60) angeordnet ist, aber nicht in Kontakt mit diesen, und ebenfalls durch einen Satz von Induktorpermanentmagneten gebildet ist, die voneinander isoliert sind und in dem inneren Teil des gesamten Umfangs (44) des Rotors (42) befestigt sind, der an den gegenüber liegenden Seiten von seitlichen Wänden (45, 46) begrenzt ist, die jeweils dieselbe Größe und Form der zugehörigen Seite haben und innerhalb des Rotors gehalten sind und an ihrer Seite durch einen Satz vorstehender Schrauben (48, 49) oder ähnlicher Elemente befestigt sind, wobei der untere Teil jeder Seitenwand (45, 46) in Gleitkontakt mit der Oberseite des jeweiligen Kreisrings (50, 51) angeordnet ist, und wobei der innere Stator (43) des elektrischen Energiegenerators (42, 43) durch einen Satz metallischer und magnetischer Bleche gebildet ist, die identisch und axial zueinander zu dem gesamten Statorumfang verbunden sind, um so einen Satz von Packungen zu bilden, wobei die Bleche seitlich von einem zum anderen durch an sich bekannte elektrische Isoliermaterialien getrennt sind, um das Auftreten von Fremdströmen zu verhindern, wobei ein solcher Satz von Packungen wie radiale Polschuhe geformt ist, der in dem Beispiel durch elf Paare von magnetischen Polen gebildet ist und von einer zugehörigen Seitenwand (57, 58) gehalten ist und zum Einsetzen von zwei zugehörigen zylindrischen Hülsen (59) zentral gebohrt ist, die miteinander oder mit anderen geeigneten Kupplungselementen gekoppelt sind, die ihrerseits in die hohle Welle (39) eingesetzt und gezwängt sind, und dass in die Packungen von magnetischen Polen die induzierten elektrischen Wicklungen eingesetzt und gehalten sind, in denen die elektrische Wechselspannung durch Induktion infolge der Rotation des Rotors (42) erzeugt wird, und wobei die Enden der elektrischen Wicklungen durch Öffnungen des Rotors vorstehen, um mit den zu beliefernden Nutzern verbunden zu werden, und dass die Seitenwände (57, 58) des Stators (43) mit einer Vielzahl radialer Nuten (47) versehen sind, die identisch und voneinander in bestimmten Intervallen beabstandet sind, um die Schlitze für die elektrischen Windungen zu positionieren, und wobei der Rotor (42) während der Rotation auf dem Stator (43) eine Kraft ausübt, die dazu tendiert, den letzteren in Rotation zu versetzen, zusammen mit der holen Welle (39), gegen eine Kraft entgegengesetzt der Rotation des Stators, bestimmt durch die Verlagerung der Hebelmittel (29, 30) in jeder ihrer End-Hub-Postionen, auf solche Weise, dass dann, wenn die Flügel (60) und das Heckstück (8; 117) von dem Wind in der normalen Richtung und mit Intensitäten in bestimmten und nicht übermäßigen Grenzen getroffen werden, das Heckstück (8; 117) verlagert und in Rotation in der horizontalen Ebene von 360° versetzt wird und unter dieser Bedingung die Flügel (60) und der Rotor mit dem Heckstück (8; 117) ausgerichtet bleibt und nicht von dieser Position versetzt werden, so dass die Flügel (60) mit derselben Ausrichtung in Rotation versetzt und nicht um ihre eigene Longitudinal-Achse gedreht werden, und der Rotor (42) bezüglich des Stators (43) rotiert, und mit einem solchen Druck, um die erforderliche elektrische Energie mit der höchsten Wirksamkeit zu erzeugen, stets unter der Gleichgewichtsbedingung zwischen dem Rotordrehmoments bezüglich des Stators, und das Drehmoment entgegengesetzt zu der Statorrotation, erzeugt durch die Hebelmittel (29, 30), erzwungen mit der hohlen Welle (39), die ihre End-Hub-Position erreicht hat, durch Stoppen der partiellen Rotation des Stators (43) und damit auch der hohlen Welle (39) mit ihren miteinander gekoppelten zylindrischen Hülsen (49), und dass dann, wenn die Flügel (60) und das Heckstück (8; 117) von dem Wind in derselben Richtung oder auch in verschiedenen Richtungen getroffen werden und Intensitäten erreicht, die größer als diejenigen der festgelegten Limits sind, wobei die Flügel (60) mit einer größeren Geschwindigkeit als die vorige rotieren und das größere Drehmoment, das auf den Stator (43) einwirkt, für eine partielle Rotation der hohlen Welle (39) und des Stators (43) zusammen mit den Hebelmitteln (29, 30) sorgt, und diese Rotation bis zur entgegengesetzten End-Hub-Position der Hebelmittel andauert, wobei ein solche Rotation durch die Hebelmittel gestoppt wird, und der Rotor (6) in eine nichtfluchtende Position bezüglich der Windrichtung verlagert wird und nichtfluchtend bezüglich des Heckstücks (8; 117) bleibt, und der Wind, der auf das Heckstück (8; 117) auftrifft, bringt es zurück in dieselbe Startposition, ausgerichtet mit der Windrichtung und unter dieser fehlausgerichteten Position des Rotors (6) trifft der Wind mit einer kleineren Kraft auf und der Rotor (6) wird kleineren mechanischen Spannungen ausgesetzt und fährt fort zu rotieren und die gewünschte Menge elektrischer Energie zu erzeugen, jedoch mit einer geringeren Effektivität als zuvor, und unter dieser Bedingung werden die Flügel (60) um ihre eigene longitudinale Achse in die fehlausgerichtete Position durch die Kupplungs-mittel (99, 100) gedreht und mit Rotationsgeschwindigkeiten gedreht, die zunehmend kleiner werden, bis die erste Position des Rotors (42) wieder hergestellt ist, in der die Flügel (60) in der umgekehrten Richtung um ihre eigene longitudinale Achse rotieren, um diese zurück in ihre ursprünglich ausgerichtete Position zu bringen.

2. Windturbine nach Anspruch 1,
**dadurch gekennzeichnet,**
**dass** die Halte- und Gelenkmittel einen metallischen Träger (21) aufweisen, der mit zwei kurzen horizontalen geradlinigen Flanschen (19, 20) geformt ist, die identisch und parallel voneinander beabstandet sind und an der Außenfläche einer kurzen zylindrischen Hülse (18) befestigt sind, die an dem Endabschnitt eines länglichen Rohres (9) angesetzt und in Position fixiert sind, das mit seinem freien Endabschnitt an dem Heckstück (8) befestigt ist, wobei sich die Flansche (19, 20) mit zwei geneigten geradlinigen Flanschen (22, 23) erstrecken, deren jeweilige freie Endabschnitte (24, 25) gekrümmt sind und durch ein flaches Endstück (26) verbunden sind, nahe der flachen Rückwand (27) des Rotors (6) und damit zusammenwirkend, wobei die geneigten Flansche (22, 23) des Trägers (21) mit einem Stift (28) in dem mittleren Bereich des horizontalen Querriegelabschnitts (13) verbunden ist, der sich außerhalb des Rotors (6) auf eine solche Weise befindet, dass das Heckstück (8) und die Stange (9) entweder in der horizontalen Ebene oder in der geneigten Ebene verlagerbar sind.

3. Windturbine nach Anspruch 1,
**dadurch gekennzeichnet,**
**dass** Haltemittel durch zwei längliche geradlinige Stangen (105, 106) gebildet sind, die parallel und etwas voneinander beabstandet sind, und mit den freien Endabschnitten an dem Heckstück (8) befestigt sind, wobei die gegenüber liegenden Endabschnitte eingesetzt sind in eine zugehörige hintere Buchse (107, 109) und eine vordere Buchse (109, 110).

4. Windturbine nach Anspruch 3,
**dadurch gekennzeichnet,**
**dass** die Halte- und Gelenkmittel einen gefalteten Träger (111) aufweisen, gebildet durch eine flache Basisplatte (112), die an dem oberen Endabschnitt der Stützstruktur (7) zur Drehung um eine horizontale Ebene angelenkt ist; durch einen vertikalen hinteren Teil (113), der die zwei hinteren Buchsen (107, 109) trägt und außerdem zentral für den Durchgang und die Halterung des horizontalen Querriegelabschnitts (13) gebohrt ist; und einen vertikalen Vorderteil (114), der die zwei vorderen Buchsen (108, 110) hält und den vorderen Abschnitt des horizontalen Querriegelabschnitts (13), wobei der Tragarm (111) durch einen Querstift (115) mit dem horizontalen Querriegelabschnitt (13) verbunden ist und die Endabschnitte des Stiftes (115) einerseits seitlich an dem Träger (111) und andererseits an einer flachen Seitenplatte (116) befestigt sind, an der die Hebelmittel angreifen.

5. Windturbine nach Anspruch 1,
**dadurch gekennzeichnet,**
**dass** jeder Windflügel (60) aus Verbundmaterialien besteht mit Sturkturbestandteilen, die bevorzugt aus Carbon bestehen, hergestellt mit einer einzigen Form aus Aluminium, um eine perfekte Reproduzierbarkeit und Auswuchtung zu erhalten, bestehend aus Schichten von verschiedenen verwendeten Materialien auf eine Weise, um eine klare Bestimmung der Funktionen der einzelnen Schichten des Materials zu erhalten, und im wesentlichen gebildet durch einen länglichen Körper (61) mit einem aerodynamischen Profil, hergestellt mit einem festen Füllermaterial (62), das vorzugsweise durch einen Bi-Komponenten-Schaum oder durch geschäumtes Polystyrol oder Polyethylen etc. geformt ist, und geformt mit einem elliptisch gekrümmten Endabschnitt (63), der zu dem anderen Endabschnitt (64) geneigt ist, der eine dünne Form hat, die in einer bestimmten Richtung geringfügig geneigt ist; und gebildet durch ein Querseitenteil (65), versehen mit einem elliptisch gekrümmten Endabschnitt (63) und bestehend aus Verbundmaterialien, insbesondere, jedoch nicht exklusiv aus Glas- und/oder Carbonfasern, und mit einem inneren Loch (66), wobei das Seitenteil perfekt in zwei Segmenten mit den Schichten der äußeren aerodynamischen Fläche (67) über den größten Teil der Länge des Windflügels (60) übereinstimmt, wobei das Seitenteil (65) innerhalb der Außenfläche (67) von zwei Sicherheitsbändern (68) vorzugsweise aus Kevlar umschlossen ist, die außen auf das Seitenteil zu der Außenfläche (67) aufgebracht sind, um zu verhindern, dass der Windflügel davon gelöst wird.

6. Windturbine nach Anspruch 5,
**dadurch gekennzeichnet,**
**dass** Befestigungs- und Haltemittel (70, 71) für die Windflügel (60) einen ersten Halteteil (70) zum Zusammensetzen des jeweiligen Windflügels (60) und einen zweiten Teil (71) aufweist, wobei der erste Teil (70) mit dem Windflügel zusammengesetzt ist, der seinerseits in den Rotor (6) eingesetzt ist.

7. Windturbine nach Anspruch 6,
**dadurch gekennzeichnet,**
**dass** der erste Teil (70) im wesentlichen durch eine untere Basis (72) einer kreisförmigen Form aus einem metallischen Material gebildet ist, geformt mit einem oberen vertikalen kegelstumpfförmigen Teil (73) mit einer äußeren gestuften Fläche, die beide ein zugehöriges inneres Durchgangsloch (74) begrenzen, das geringfügig entsprechend dem oberen Rand (75) des oberen vertikalen Teils (73) geneigt ist, wobei die untere Basis (72) geeignet ist, mit dem ersten Teil (71) zusammengesetzt zu werden, nachdem diese in der zugehörigen Anwendungsposition des Rotors (6) befestigt ist, und dass das Durchgangsloch (74) geeignet ist, das zugehörige Seitenteil (65) jedes Windflügels (60) aufzunehmen.

8. Windturbine nach Anspruch 7, wobei das Seitenteil (65) mit einem inneren Loch (76) einer bestimmten Tiefe versehen ist, um darin einen zugehörigen kegelstumpfförmigen Teil (77) aus einem metallischen Material lösbar einzusetzen, unter Zwischenschaltung einer zugehörigen ersten zylindrischen Dichtung (78) aus einem elastomerischen Material, auf eine Weise, dass bei dem ersten Montageschritt dieser Bauteile, bei dem der kegelstumpfförmige Teil (77) und die Dichtung (78) mit dem Seitenteil (65) zusammengesetzt werden, dieser Teil (77) mit seinem Rand (79) über den Rand (80) des Seitenteils (65) und die Dichtung (78) vollständig in dem inneren Loch (76) untergebracht ist, wobei die Dichtung (78) geeignet ist, die maximalen Vibrationen zu dämpfen, die durch Rotation der Windflügel (60) entstehen, um so die Übertragung der Vibrationen auf andere Bauteile der Windturbine zu verhindern oder so weit wie möglich zu reduzieren;
**dadurch gekennzeichnet,**
**dass** in dem zweiten Montageschritt dieser Bauteile eine zweite Dichtung aus Gummi oder einem anderen Elastomer (82) auf die Außenfläche des Seitenteils (65) aufgebracht wird, in einer Position, die derjenigen der ersten Dichtung (78) entspricht und über eine Länge, die dieser letzteren gleich ist und die etwas kürzer ist als die Länge, die zwischen dem oberen Rand (75) des oberen Teils (73) und einem kreisförmigen Schlitz (83) in dem inneren Loch (74) nahe des unteren Mundstück davon existiert, vorgesehen für das Einsetzen eines zugehörigen Schnapprings, wobei die Dichtung (82) dieselbe Funktion hat, wie sie oben für die erste Dichtung (78) beschrieben ist; dass in dem dritten Montageschritt das Seitenteil (65) mit den zusammengesetzten Bauteilen vollständig durch das Durchgangsloch (74) eingesetzt wird, bis die Dichtungen (78, 82) vollständig den Teil des Seitenteils (65) umschließen, wodurch sie ihre Funktion zur Dämpfung der Vibrationen, wie oben beschrieben, ausüben, und die Ränder (79, 80) des Teils (77) und das Seitenteil (65) treten über den kreisförmigen Schlitz (83) ein, woraufhin ein zylindrischer Einsatz (85), vorgesehen in einem inneren Hohlraum (86), durch das Durchgangsloch (81) des Teils (77), den Hohlraum (86), durch den eine zugehörige Feder (88) mit einer bewegbaren Wand (89) verbunden wird, eingesetzt wird, wobei die Feder geeignet ist, von einem äußeren Stopfen (90) komprimiert zu werden, der gedrückt wird, bis er von dem Schnappring in dem kreisförmigen Schlitz (83) gehalten wird, mit zugehöriger Kompression der Feder (88), wobei unter dieser Bedingung die Kompression der Feder (88) infolge der Elastizität der Kunststoffmaterialien, die den Einsatz (85), das Teil (77) und das obere Teil (73) bilden, für einen besseren Sitz der Dichtungen (78, 82) in den jeweiligen Anwendungspositionen sorgt, wodurch die vibrationsdämpfende Wirkung effektiv erhöht wird; und wobei in dem folgenden Montageschritt alle beschriebenen Bauteile des ersten Teils (70) mit dem zweiten Teil (71) gekoppelt werden, das bereits in dem Rotor (6) montiert ist, mit nachfolgender Montage der Windflügel (60) der Windturbine in ihre Position.

9. Windturbine nach Anspruch 8,
**dadurch gekennzeichnet,**
**dass** der zweite Teil (71) im wesentlichen durch eine zylindrische Hülse (91) gebildet ist, die an ihrem unteren Teil mit einem größeren zylindrischen Bund (92) verbunden ist und mit diesem ein inneres zylindrisches Durchgangsloch (93) begrenzt, das entsprechend dem oberen Rand (94) der Hülse (91) etwas enger wird, wobei der zweite Teil (71) in den Rotor (6) eingebaut wird, in dem die zylindrische Hülse (91) von dem Boden aufwärts durch ein zugehöriges zylindrisches Durchgangsloch (95) der zugehörigen Umfangswand (36) des Rotors (6) auf eine Weise eingesetzt wird, dass der größere Bund (92) und die Hülse (91) in dem Inneren des Rotors angeordnet sind und nach außen vorstehen, und dass auf den zylindrischen Bund (92) ein erstes zylindrisches Lager (96) in einer Position aufgebracht wird, die zwischen dem Bund und der darüber liegenden Umfangswand (36) angeordnet ist, worauf dann nacheinander ein zweites Lager (97) und eine sichernde Ringmutter (98) überlappt werden, die dieselbe Breite wie das erste Lager (96) hat, wobei in diesem Zustand das erste und das zweite Lager (96, 97) auf der Umfangswand (36) mit ihrer jeweiligen Fläche in Kontakt mit der Wand gleiten, wenn die Hülse (91) in Rotation versetzt wird, zusammen mit dem zugehörigen Windflügel (60), mit einer begrenzten Drehbewegung um die eigene longitudinale vertikale Achse.

10. Windturbine nach Anspruch 9,
**dadurch gekennzeichnet,**
**dass** Kupplungsmittel einen kurzen Stift (99), der in jeden zylindrischen Bund (92) eingreift und nach unten von dem Bund vorsteht, und einen zugehörigen Durchgangsschlitz (100) aufweist, der durch den Umfang (44) des Rotors (6) verläuft, wobei der freie Endabschnitt jedes Stiftes (99) stetig auf eine Weise eingesetzt ist, dass der Rotor (42) gleichzeitig mit der Rotation der Windflügel (60) in Rotation versetzt wird, wobei eine solche Verlagerung wegen des stetigen Eingriffs jedes Stiftes (99) in den zugehörigen Schlitz (100) des Rotors (42) eine begrenzte gleichzeitige Rotation der zugehörigen Hülsen (91) und der damit verbundenen Windflügel hervorruft, und der Rotor, wenn die Aktion, die die Drehbewegung der Hülsen (91) bestimmt, beendet ist, wieder in seine Ausgangsposition gebracht wird, mit einer zugehörigen gleichzeitigen Rotation in der Umkehrrichtung der Hülsen (91) und der damit verbundenen Windflügel, die damit ebenfalls wieder in ihre Ausgangsposition gebracht werden.

11. Windturbine nach Anspruch 10,
**dadurch gekennzeichnet,**
**dass** jedes erste Teil (70) mit dem zweiten Teil (71) durch Einsetzung durch das Durchgangsloch (73) gekoppelt ist mit Hilfe eines Bajonettverschlusses oder dergleichen, wobei die untere Basis (72) mit allen zusammengesetzten Bauteilen und durch nachfolgendes Klemmen dieser Bauteile in Position mit Hilfe einer fixierenden Ringmutter (102), die auf ein zugehöriges Außengewinde der unteren Stufe (103) des oberen vertikalen Teils (73) aufgeschraubt ist.

12. Windturbine nach den vorhergehenden Ansprüchen,
**dadurch gekennzeichnet,**
**dass** das Heckteil (117) im wesentlichen durch ein Rad (118) gebildet ist, das aus einer kreisförmigen Umfangswand (119) und einer Vielzahl von Speichenelementen (120) besteht, die gleichmäßig im Winkel voneinander beabstandet verteilt sind und an einem Endabschnitt innen an der Umfangswand (119) befestigt sind und zu der Mitte des Rades hin zu laufen, wobei die anderen Endabschnitte an einem Nabenelement (21) in der Mitte des Rades befestigt sind, das an dem Endabschnitt eines geradlinigen Arms (122) gehalten ist, dessen anderer Endabschnitt an einer rückwärtigen unteren Zone eines geformten Trägers (123) angelenkt ist, der seinerseits an dem oberen Teil der Stützstruktur (7) befestigt ist und an den Hebelmitteln angebracht ist, und dass an dem oberen und dem unteren Endabschnitt des geformten Trägers (123) auch der freie Endabschnitt des horizontalen Querriegelteils (13) befestigt ist, wobei das Nabenelement (121) geeignet ist, bei der Rotation mit Hilfe eines Riemens (124) oder dergleichen ein Rad (125) zu betätigen, das in dem geformten Träger (123) vorgesehen ist, wobei ein fünftes Rad (126), das an dem oberen Teil der Stützstruktur (7) gehalten ist, auf eine Weise ergriffen ist, um eine Rotation des Trägers und des Rotors in derselben Windrichtung in verschiedenen Positionen hervorzurufen.

## Revendications

1. Éolienne dotée d'une régulation par variation du calage des pales et d'un effacement latéral du vent, qui est réalisée dans des dimensions relativement limitées, destinée en particulier à des installations dans des environnements habités, et agencée de façon à fonctionner également dans des conditions de vent fort, de manière à générer de l'énergie électrique destinée à être utilisée dans ces mêmes résidences habitées, ou également destinée à être utilisée par d'autres utilisateurs, et qui comprend une structure de soutènement verticale (7) fixée sur le sol, sur une plaque métallique ou sur des fondations, etc ..., et qui présente une hauteur limitée, comprise de préférence entre 3 et 20 mètres environ ; un rotor rotatif (6) supporté d'une manière articulée par la structure de soutènement (7) ; des pales rotatives (60) supportées par le rotor rotatif (6) et installées et orientées de façon à recevoir la poussée du vent, et destinées à tourner autour de leur propre axe longitudinal ; une queue (8 ; 117) fixée sur la partie arrière de l'éolienne et supportée de manière articulée par ladite structure de soutènement (7) et adaptée de façon à être déplacée et tournée d'une manière alternée par la poussée du vent, de même que le rotor rotatif (6) et les pales rotatives (60), dans un plan horizontal ou dans un plan incliné par rapport au plan horizontal ; des moyens de support et d'articulation (21 ; 11 ; 123), dont une partie extrémité pivote avec ledit rotor (6) par l'intermédiaire de moyens de levier (29, 30) et avec la partie extrémité de support de ladite structure de soutènement (7), et dont l'autre partie extrémité est connectée à des moyens de support (9 ; 105, 106 ; 122) fixés sur la queue associée (8 ; 117) ; et qui comprend également un générateur d'énergie électrique synchrone (42, 43), qui est connecté de manière mécaniquement auxdites pales (60), et qui est actionné en rotation par la rotation des pales, de façon à générer de l'énergie électrique par induction électromagnétique, ledit générateur d'énergie électrique (42, 43) comprenant au moins un rotor périphérique (42) qui agit en tant qu'aimant d'induction, et un stator fixe intérieur (43) qui agit en tant qu'induit, tous deux étant logés à l'intérieur dudit rotor (6), ledit rotor (42) étant supporté par une partie rectiligne horizontale à savoir par une tige centrale (13), reliée à ladite structure de support (7), et étant adaptée de façon à être actionnée en rotation par la rotation desdites pales (60) par l'intermédiaire de moyens d'accouplement (99, 100), et ledit induit (43) étant doté d'enroulements électriques induits, et supporté par ladite partie rectiligne (13), de façon à pouvoir tourner de manière libre autour de celle-ci selon une course établie, dans laquelle :
ledit rotor (6) est constitué sensiblement par une enveloppe similaire à une boîte formée par une paroi arrière plate (27), par une paroi avant plate opposée (35) qui est parallèle à cette dernière et qui est espacée de celle-ci dans la direction transversale à partir de ladite paroi arrière (27), et par un ensemble de parois périphériques (36) qui sont identiques et reliées les unes aux autres et aux parois avant et arrière associées (27, 35), et présentant le même nombre de pales prévues (60) de l'éolienne, les zones centrales de ladite paroi arrière (27) et de ladite paroi avant (35) étant alésées et délimitant un siège correspondant destiné à recevoir et à fixer un roulement associé (37, 38), adapté de manière à supporter la partie horizontale d'une barre de section (13), située à l'intérieur dudit rotor (6), et un arbre creux (39) qui est inséré à travers le roulement arrière (37) et qui s'étend jusqu'à proximité du roulement avant (38), sans entrer en contact avec ce dernier, grâce à la présence d'autres roulements (37', 38') interposés entre ladite partie barre de section (13) et ledit arbre creux (39), et dans laquelle :
à travers le trou traversant longitudinal (40) dudit arbre creux (39), est insérée et fixée de manière appropriée ladite partie barre de section (13), qui se situe à l'intérieur dudit rotor (6) sur toute la largeur du rotor, de telle manière que la partie terminale de la partie barre de section (13) soit verrouillée en position par un écrou a oeil avant (41), de telle sorte que cette partie barre de section (13) soit supportée en avant par le roulement avant (38), par l'intermédiaire d'un autre roulement (38'), et supporte à son tour la partie extrémité terminale intérieure de l'arbre creux (39), et supporte vers l'arrière, par l'intermédiaire de l'autre roulement (37'), l'autre partie extrémité de l'arbre creux, qui est supporté à son tour en position par le roulement arrière (37), dans laquelle chacun desdits roulements (37, 38) est constitué par un anneau extérieur (52) et par un anneau intérieur (53), en délimitant un chemin de roulement destiné à faire glisser les sphères (54) du roulement associé, et sur la surface supérieure de l'anneau extérieur (52) de chaque roulement, est agencée et fixée la surface inférieure d'un anneau circulaire associé (50, 51), fixé sur la surface intérieure de la paroi arrière correspondante (27) et de la paroi avant (35) dudit rotor (6), et dans laquelle la surface inférieure de l'anneau intérieur (53) de chaque roulement est fixée sur la surface extérieure dudit arbre creux (39), dans un état où le rotor périphérique (42) dudit générateur d'énergie électrique (42, 43) peut tourner sur les sphères (54) des roulements associés (37, 38) quand il est actionné en rotation par la rotation des pales (60), et **caractérisée en ce que** lesdits moyens de levier sont constitués par un bras rectiligne court (29) et par une fourche (30), dont la forme au niveau d'une partie extrémité présente une tige courte (31) et au niveau de l'autre partie extrémité présente une partie semi-circulaire (32), dans laquelle les parties extrémités en forme d'oeillet (33, 34) du bras rectiligne (29) pivotent de manière respective avec lesdits moyens de support et d'articulation (21 ; 11 ; 123) et avec la partie extrémité de la tige (31) de ladite fourche (30), et se déplacent également en s'éloignant en avant, sans entrer en contact, par rapport à la paroi arrière plate (27) dudit rotor (6) et en coopération avec celle-ci, tandis que la partie semi-circulaire (32) de la fourche (30) entoure la partie horizontale correspondante (13) et est fixée sur la partie extrémité arrière dudit arbre creux (39), de telle manière que, grâce à cet agencement, l'arbre creux (39) puisse tourner de manière libre autour desdits autres roulements (37', 38'), en actionnant de ce fait également dans la même direction lesdits moyens de levier (29, 30), qui peuvent tourner de manière libre autour de ladite partie horizontale de barre de section (13) avec une course établie par des positions de fin de course des moyens de levier, tandis que la partie barre de section (13) demeure toujours fixe et ne tourne pas, et dans laquelle :
le rotor périphérique (42) dudit générateur d'énergie électrique (42, 43) est réalisé avec un diamètre plus grand que celui dudit stator (43), de type fixe, et est légèrement espacé de manière radiale du stator, et sa surface extérieure se situant dans une position rapprochée, mais sans être en contact, avec la structure desdites pales (60), et est également constitué par un ensemble d'aimants permanents d'induction, isolés de manière appropriée les uns des autres, et fixés dans la partie intérieure de toute la circonférence (44) du rotor (42), qui est délimitée, au niveau de ses côtés opposés, par un côté respectif qui ferme la paroi (45, 46), chacun d'eux étant réalisé avec les mêmes dimensions et forme que celles du côté correspondant et étant supporté de manière intérieure par ledit rotor (6), et étant fixé de manière appropriée sur son propre côté au moyen d'un ensemble de vis associées qui font saillie (48, 49) ou d'éléments similaires, et la partie inférieure de chaque paroi latérale (45, 46) est agencée de manière correspondante, et en contact glissant, avec la surface supérieure dudit anneau circulaire associé (50, 51), et dans laquelle :
le stator intérieur (43) dudit générateur d'énergie électrique (42, 43) est constitué par un ensemble de feuilles métalliques et magnétiques, qui sont identiques et reliées de manière axiale les unes aux autres sur toute la circonférence du stator, de façon à former un ensemble de paquets laminés, dont les feuilles sont séparées de manière transversale les unes des autres au moyen de matériaux isolants de manière électrique connus en tant que tels, de façon à empêcher la formation de courants parasites, un tel ensemble de paquets laminés étant mis en forme comme des épanouissements polaires radiaux, constitué dans l'exemple par onze paires de pôles magnétiques et supporté par une paroi latérale respective (57, 58), et sont alésés de manière centrale de manière à pouvoir insérer à l'intérieur deux manchons cylindriques correspondants (59), qui sont accouplés les uns aux autres ou à d'autres éléments d'accouplement appropriés, qui sont insérés à leur tour dans, et mis en force sur, ledit arbre creux (39), et **en ce que**, dans les paquets laminés de pôles magnétiques, sont insérés et supportés les enroulements électriques induits, dans lesquels est générée par induction la tension alternative électrique grâce à la rotation dudit rotor (42), et les bornes des enroulements électriques font saillie à travers des ouvertures du rotor (6), de façon à les connecter aux utilisateurs à alimenter, et **en ce que** les parois latérales (57, 58) du stator (43) sont dotées d'une pluralité d'encoches radiales (47), qui sont identiques et espacées les unes des autres selon des intervalles déterminés, de façon à positionner les fentes des enroulements électriques, et dans laquelle :
ledit rotor (42) exerce sur ledit stator (43), lors de sa rotation, une force qui tend à actionner ce dernier en rotation, ainsi que ledit arbre creux (39), à l'encontre d'une force opposée à la rotation du stator, qui est déterminée par le déplacement desdits moyens de levier (29, 30) dans l'une ou l'autre de leurs positions de fin de course, de telle manière que, lorsque les pales (60) et la queue (8 ; 117) sont frappées par le vent dans la direction normale et avec des intensités qui se situent à l'intérieur de limites déterminées et non excessives, la queue (8 et 117) soit déplacée et actionnée en rotation dans le plan horizontal de 360°, et dans cet état, les pales (60) et le rotor (6) demeurent alignés avec la queue (8 ; 117) et ne sont pas déplacés à partir de cette position, de telle sorte que les pales (60) soient actionnées en rotation avec la même orientation et ne tournent pas autour de leur propre axe longitudinal, et fournissent la rotation dudit rotor (42) par rapport audit stator (43), et avec une telle poussée de façon à produire la quantité d'énergie électrique requise avec le rendement le plus élevé, toujours dans l'état d'équilibre entre le couple de rotor par rapport au même stator, et le couple en opposition à la rotation du stator, qui est produit par les moyens de levier (29, 30) contraints avec l'arbre creux (39), qui ont atteint leur position de fin de course, en arrêtant la rotation partielle du stator (43) et donc également celle de l'arbre creux (39), ses manchons cylindrique (59) étant accouplés entre eux, et que, lorsque les pales (60) et la queue (8 ; 117) sont frappées par le vent dans la même direction ou également dans des directions différentes et qui atteint des intensités qui sont supérieures à celles des limites déterminées, lesdites pales (60) tournent avec une vitesse supérieure à la précédente, le couple plus grand exercé sur ledit stator (43) fournit une rotation partielle de l'arbre creux (39) et du stator (43), ainsi que desdits moyens de levier (29, 30), et cette rotation se poursuit jusqu'à la position de fin de course opposée des moyens de levier, où une telle rotation est arrêtée par les moyens de levier, et le rotor (6) est déplacé dans une position non alignée par rapport à la direction du vent, et demeure non aligné par rapport à la queue (8 ; 117), et le vent qui frappe la queue (8 et 117) la ramène dans la même position de départ, alignée avec la direction du vent, et dans cette position non alignée du rotor (6), le vent la frappe avec une puissance plus petite et le rotor (6) est soumis à de moindres contraintes mécaniques, en continuant toujours à tourner et à générer ainsi la quantité d'énergie électrique requise, toutefois avec un rendement plus faible que le précédent, et dans cet état lesdites pales (60) sont tournées autour de leur propre axe longitudinal dans leur position non alignée par lesdits moyens d'accouplement (99, 100), et sont tournées avec des vitesses de rotation qui décroissent de manière progressive jusqu'à retrouver ladite première position du rotor (42), dans laquelle les pales (60) sont tournées dans la direction inverse autour de leur propre axe longitudinal, en les amenant de nouveau dans leur position orientée au commencement.

2. Éolienne selon la revendication 1, **caractérisée en ce que** lesdits moyens de support et d'articulation comprennent un support métallique (21) mis en forme avec deux brides rectilignes horizontales courtes (19, 20), qui sont identiques et espacées parallèles l'une à l'autre, et qui est fixé sur la surface extérieure d'un manchon cylindrique court (18), inséré et verrouillé en position sur la partie extrémité d'une tige allongée (9) fixée sur ladite queue (8) par sa partie extrémité libre, lesdites brides (19, 20) s'étendant avec deux brides rectilignes inclinées (22 et 23), dont les parties extrémités libres respectives (24 et 25) sont incurvées et reliées l'une à l'autre par une partie terminale plate (26), à proximité de la paroi arrière plate (27) dudit rotor (6) et en coopération avec celui-ci, lesdites brides inclinées (22, 23) dudit support (21) pouvant pivoter avec une tige (28) dans la zone médiane de ladite partie horizontale de barre de section (13), qui est extérieure audit rotor (6), de telle manière que ladite queue (8) et ladite tige (9) puissent se déplacer dans ledit plan horizontal ou dans ledit plan incliné.

3. Éolienne selon la revendication 1, **caractérisée en ce que** lesdits moyens de support sont constitués par deux tiges rectilignes allongées (105, 106), qui sont parallèles et légèrement espacées l'une de l'autre, aux parties extrémités libres desquelles est fixée ladite queue (8), et dont les parties extrémités opposées sont insérées dans une bague arrière (107, 109) et dans une bague avant (108, 110) respectives.

4. Éolienne selon la revendication 3, **caractérisée en ce que** lesdits moyens de support et d'articulation comprennent un support plié (111), formé par une plaque de base plate (112) qui pivote sur la partie extrémité supérieure de ladite structure de soutènement (7), destiné à tourner autour d'un plan horizontal ; par une partie arrière verticale (113) qui supporte lesdites deux bagues arrière (107, 109), et qui est également alésée de manière centrale de façon à laisser passer et à supporter ladite partie horizontale de barre de section (13) ; et par une partie avant verticale (114) qui supporte les deux bagues avant (108, 110) et la partie extrémité avant de la partie horizontale de barre de section (13), ledit support (111) pivotant à l'aide d'une tige transversale (115) avec la partie horizontale de barre de section (13), et les parties extrémités de ladite tige (115) étant fixées, l'une de manière latérale au support (111), et l'autre à une plaque plate latérale (116), avec lesquelles lesdits moyens de levier viennent en prise.

5. Éolienne selon la revendication 1, **caractérisée en ce que** chaque pale (60) est réalisée dans des matériaux composites dotés de parties structurales constituées de préférence en carbone, fabriquée avec une seule matrice d'aluminium qui permet d'obtenir une reproductibilité et un équilibrage parfaits, et est obtenue avec des couches de différents matériaux utilisés, de façon à obtenir une distinction claire des fonctions des seules couches de matériaux, et est sensiblement constituée par un corps allongé (61) qui présente un profil aérodynamique, réalisé dans un matériau de remplissage plein (62) formé de préférence par une mousse à deux composants ou par une mousse de polystyrène ou par un polyuréthane, etc ..., et mise en forme avec une partie extrémité incurvée de forme elliptique (63) amincie vers l'autre partie extrémité (64) de celle-ci, qui présente une forme rendue mince qui est légèrement inclinée dans une direction déterminée ; et elle est constituée par un élément latéral transversal (65) prévu sur la partie extrémité incurvée elliptique (63) et réalisé dans des matériaux composites, en particulier, mais pas exclusivement, de la fibre de verre et / ou de carbone, et qui délimite un trou intérieur (66), lequel élément latéral coïncide parfaitement dans 2 segments de celui-ci avec les couches de la surface aérodynamique extérieure (67) de la majeure partie de la longueur de la pale (60), ledit membre latéral (65) étant également enfermé de manière intérieure, sur la surface extérieure (67), par deux bandes de sécurité (68) réalisées de préférence en Kevlar, qui sont appliquées de manière extérieure sur ledit élément latéral, sur ladite surface extérieure (67), de façon à éviter que la pale ne s'en détache.

6. Éolienne selon la revendication 5, **caractérisée en ce que** lesdits moyens de montage et de support (70, 71) desdites pales (60) comprennent une première partie support (70) destinée à assembler ladite pale associée (60), et une seconde partie (71) dans laquelle est assemblée ladite première partie (70) avec la pale, laquelle partie étant assemblée à son tour dans le rotor (6).

7. Éolienne selon la revendication 6, **caractérisée en ce que** ladite première partie (70) est constituée sensiblement par une base inférieure (72) de forme circulaire, réalisée dans un matériau métallique, formée avec une partie tronconique verticale supérieure (73) qui présente une surface étagée extérieure, toutes deux délimitant un trou traversant intérieur correspondant (74) qui s'amincit légèrement en fonction du bord supérieur (75) de la partie verticale supérieure (73), ladite base inférieure (72) étant adaptée de façon à être assemblée sur la seconde partie (71) une fois que cette dernière a été fixée dans la position d'application associée dudit rotor (6), et ledit trou traversant (74) étant adapté de façon à recevoir l'élément latéral correspondant (65) de chaque pale (60).

8. Éolienne selon la revendication 7, dans laquelle :
ledit élément latéral (65) est doté d'un trou intérieur (76) qui présente une profondeur déterminée, à l'intérieur duquel est insérée de manière amovible une partie tronconique correspondante (77) réalisée dans un matériau métallique, avec l'interposition d'une première garniture d'étanchéité cylindrique correspondante (78) réalisée dans un matériau élastomère, de telle manière qu'au cours de la première étape d'assemblage de ces éléments, dans laquelle la partie tronconique (77) et la garniture (78) sont assemblées sur l'élément latéral (65), cette partie (77) fasse saillie avec son bord terminal (79) au-delà du bord terminal (80) de l'élément latéral (65) et que la garniture (78) soit entièrement logée dans le trou intérieur (76), ladite garniture (78) étant adaptée de façon à amortir, dans une grande mesure, les vibrations produites par la rotation des pales (60), de manière à empêcher ou à réduire autant que faire se peut, la transmission des vibrations aux autres éléments de l'éolienne ; **caractérisée en ce que**, au cours de la deuxième étape d'assemblage de ces éléments, une deuxième garniture en caoutchouc ou en tout autre élastomère (82), est appliquée sur la surface extérieure de l'élément latéral (65), dans une position qui correspond à celle de la première garniture (78) et sur une longueur égale à celle de cette dernière, et qui est légèrement plus courte que la longueur qui existe entre le bord supérieur (75) de la partie supérieure (73), et une fente circulaire (83) disposée dans le trou intérieur (74), à proximité de l'embouchure inférieure de celui-ci, et prévue afin d'insérer un anneau de retenue correspondant, ladite garniture (82) remplissant la même fonction de celle de ladite première garniture (78) décrite ci-dessus ; **caractérisée en ce que**, au cours de la troisième étape d'assemblage, ledit élément latéral (65) ainsi que l'ensemble assemblé, est inséré en totalité à travers ledit trou traversant (74), jusqu'à ce que les garnitures (78, 82) enferment en totalité la partie de l'élément latéral (65), en remplissant de ce fait leur fonction d'amortissement des vibrations comme cela a été décrit précédemment, et les bords terminaux (79, 80), respectivement de la partie (77) et de l'élément latéral (65), sont introduits au-delà de la fente circulaire (83), puis une pièce rapportée cylindrique (85) dotée d'une cavité intérieure (86) est insérée à travers le trou traversant (81) de ladite partie (77), cavité (86) à travers laquelle est inséré un ressort correspondant (88) relié par une paroi mobile (89), lequel ressort est adapté de façon à être comprimé par un bouchon extérieur (90), qui est poussé jusqu'à être retenu par l'anneau de retenue logé dans la fente circulaire (83), avec une compression résultante du ressort (88), et dans cet état, la compression du ressort (88) fournit, grâce à l'élasticité des matériaux en matière plastique qui constituent la pièce rapportée (85), la partie (77) et la partie supérieure (73), une meilleure adhérence des garnitures (78, 82) dans les positions d'application respectives, en accroissant de ce fait de manière efficace l'action d'amortissement des vibrations ; et dans laquelle :
au cours de l'étape suivante d'assemblage, tous les éléments décrits de la première partie (70) sont accouplés à la seconde partie (71), qui a été déjà assemblée dans le rotor (6), et il en résulte un assemblage en position des pales (60) de l'éolienne.

9. Éolienne selon la revendication 8, **caractérisée en ce que** ladite seconde partie (71) est sensiblement constituée par un manchon cylindrique (91) relié, au niveau de sa partie inférieure, à un collier cylindrique agrandi (92) et qui délimite avec ce dernier, un trou traversant cylindrique intérieur (93), qui est légèrement rétréci en correspondance avec le bord supérieur (94) du manchon (91), ladite seconde partie (71) étant assemblée dans le rotor (6) en insérant le manchon cylindrique (91) à partir du fond vers le haut, à travers un trou traversant circulaire correspondant (95) de la paroi périphérique associée (36) du rotor (6), de telle sorte que le collier agrandi (92) et le manchon (91) se situent respectivement à l'intérieur du rotor et fassent saillie à l'extérieur de celui-ci, et en appliquant sur le collier cylindrique (92) un premier roulement cylindrique correspondant (96), dans une position qui se situe entre ce collier (92) et ladite paroi périphérique sus-jacente (36), sur laquelle sont ensuite superposés à la suite un second roulement (97) et un écrou à oeil de sécurité (98), présentant la même largeur que celle du premier roulement (96), et dans cet état, les premier et second roulements (96, 97) peuvent glisser sur la paroi périphérique (36), leurs surfaces associées étant en contact avec la paroi, lorsque le manchon (91) est actionné en rotation, ainsi que la pale associée (60), avec un mouvement en rotation limité autour de son propre axe vertical longitudinal.

10. Éolienne selon la revendication 9, **caractérisée en ce que** lesdits moyens d'accouplement comprennent une tige courte (99) fixée dans chaque collier cylindrique (92) et qui fait saillie vers le bas à partir du collier, et une fente traversante correspondante (100) prévue à travers la circonférence (44) du rotor (6), dans laquelle la partie extrémité libre de chaque tige (99) est insérée de manière fixe, de telle sorte que le rotor (42) soit actionné en rotation en même temps que la rotation des pales (60), et qu'un tel déplacement fournisse, grâce à la mise en prise fixe de chaque tige (99) avec la fente correspondante (100) du rotor (42), une rotation simultanée limitée des manchons correspondants (91) et des pales associées et, lorsque l'action qui détermine le déplacement en rotation des manchons (91) a pris fin, le rotor (42) est ramené dans sa position initiale, avec une rotation simultanée résultante dans la direction inverse également des manchons (91) et des pales associées, qui donc sont également ramenées de nouveau dans leur position initiale.

11. Éolienne selon la revendication 10, **caractérisée en ce que** chaque première partie (70) est accouplée à la seconde partie (71) en insérant à travers ledit trou traversant (93), au moyen d'un accouplement à baïonnette ou similaire, ladite base inférieure (72) avec tous les éléments assemblés, et en bloquant par la suite ces éléments en position, à l'aide d'un écrou a oeil de fixation (102), qui est vissé sur un filetage extérieur correspondant du palier inférieur (103) de ladite partie verticale supérieure (73).

12. Éolienne selon l'une quelconque des revendications précédentes, **caractérisée en ce que** ladite queue (117) est sensiblement constituée par une roue (118) formée par une paroi périphérique circulaire (119) et par une pluralité de rayons (120), répartis et espacés de manière régulière avec un certain angle les uns par rapport aux autres, et fixés de manière intérieure au niveau de leur partie extrémité dans la paroi périphérique (119), et qui convergent vers le centre de la roue, et les autres parties extrémités sont toutes fixées à un élément moyeu (121), agencé au centre de la roue, et supportés au niveau de la partie extrémité d'un bras rectiligne (122), dont l'autre partie extrémité pivote dans la zone inférieure arrière d'un support mis en forme (123), qui est supporté à son tour de manière appropriée sur la partie supérieure de la structure de soutènement (7), et qui est relié auxdits moyens de levier, et **en ce qu'**est également fixée, sur la partie extrémité arrière et supérieure du support mis en forme (123), la partie extrémité libre de la partie horizontale de barre de section (13), ledit élément moyeu (121) étant adapté de façon à actionner en rotation, au moyen d'une courroie (124) ou similaire, un engrenage (125) qui pivote dans le support mis en forme (123), et qui vient à son tour en prise avec une cinquième roue (126) supportée par la partie supérieure de la structure de soutènement (7), de manière à fournir la rotation du support et du rotor dans la même direction du vent, dans différentes positions.
